(19) Europäisches Patentamt

European Patent Office

Office européen des brevets

(11) **EP 0 334 768 B1**

(12) **EUROPEAN PATENT SPECIFICATION**

(45) Date of publication and mention
of the grant of the patent:
**08.10.1997  Bulletin 1997/41**

(51) Int Cl.⁶: **G06F 7/50**

(21) Application number: **89400856.4**

(22) Date of filing: **24.03.1989**

(54) **Logic circuit having carry select adders**

Logikschaltung mit Uebertragungsgesteuerten Addierer

Circuit logique ayant des additionneurs à sélection de report

(84) Designated Contracting States:
**DE FR GB**

(30) Priority: **25.03.1988  JP 72635/88**

(43) Date of publication of application:
**27.09.1989  Bulletin 1989/39**

(73) Proprietor: **FUJITSU LIMITED**
**Kawasaki-shi, Kanagawa 211 (JP)**

(72) Inventors:
• **Goto, Gensuke**
**Ebina-shi Kanagawa 243-04 (JP)**
• **Kubosawa, Hajime**
**Machida-shi Tokyo 194 (JP)**

(74) Representative: **Joly, Jean-Jacques et al**
**Cabinet Beau de Loménie**
**158, rue de l'Université**
**75340 Paris Cédex 07 (FR)**

(56) References cited:
**EP-A- 0 123 921          EP-A- 0 165 623**
**EP-A- 0 242 600          US-A- 3 993 891**

• **PATENT ABSTRACTS OF JAPAN vol. 6, no. 252**
**(P-161)(1130) 10 December 1982, & JP-A-57**
**147754**
• **PATENT ABSTRACTS OF JAPAN vol. 11, no. 56**
**(P-549)(2503) 20 January 1987, & JP- A- 61**
**221822**
• **PATENT ABSTRACTS OF JAPAN vol. 11, no. 62**
**(P-551)(2509) 25 February 1987, & JP- A- 61**
**226836**

## Description

BACKGROUND OF THE INVENTION

The present invention generally relates to a logic circuit having carry select adders, and more particularly to a logic circuit including two-stage carry select adders capable of processing multiple bits such as 32, 64 and 80 bits in parallel at the same time.

In conventional multiple bit parallel full adders, each of two integers to be processed is divided into a plurality of units each consisting of a predetermined number of digits. Then, an adding operation is made between the corresponding units, and the operation results obtained for every unit are combined. This operation procedure is intended to enhance the operation speed.

A carry select adder is known as a multiple bit parallel full adder. FIG.1 shows a conventional 16-bit carry select adder (see Japanese Patent Publication published under No 57147754). Referring to this figure, the illustrated 16-bit carry select adder includes four 4-bit-length partitioned adders CSA, four sets of two-input multiplexers MPX, and four carry selectors CS. A and B are binary numbers each represented with M digits, where binary numbers A and B are an augend and an addend, respectively, in obtaining the arithmetic sum. Each of the binary numbers A and B has an amount of information corresponding to 16 bits when M = 16. Each of the 16-bit binary numbers A and B is divided into four portions (hereafter, each portion is referred to as a partitioned bit set), A3 - A0, B3 - B0, A15 - A12, B15 - B12, which are supplied to the corresponding 4-bit partitioned adders CSA. Each bit contained in each of the partitioned bit sets assumes '0' or '1'.

$C_{-1}$ is a real carry signal supplied from the digit immediately below the lowest-order digit out of 16 digits. $C3^0$, $C7^0$, $C11^0$ and $C15^0$ are carry signals which are propagated to higher-order digits when the real carry signal $C_{-1}$ is '0'. $C3^1$, $C7^1$, $C11^1$ and $C15^1$ are carry signals which are propagated to higher-order digits when the real carry signal $C_{-1}$ is '1'. S0 - S15 form a sum output signal S (= A + B).

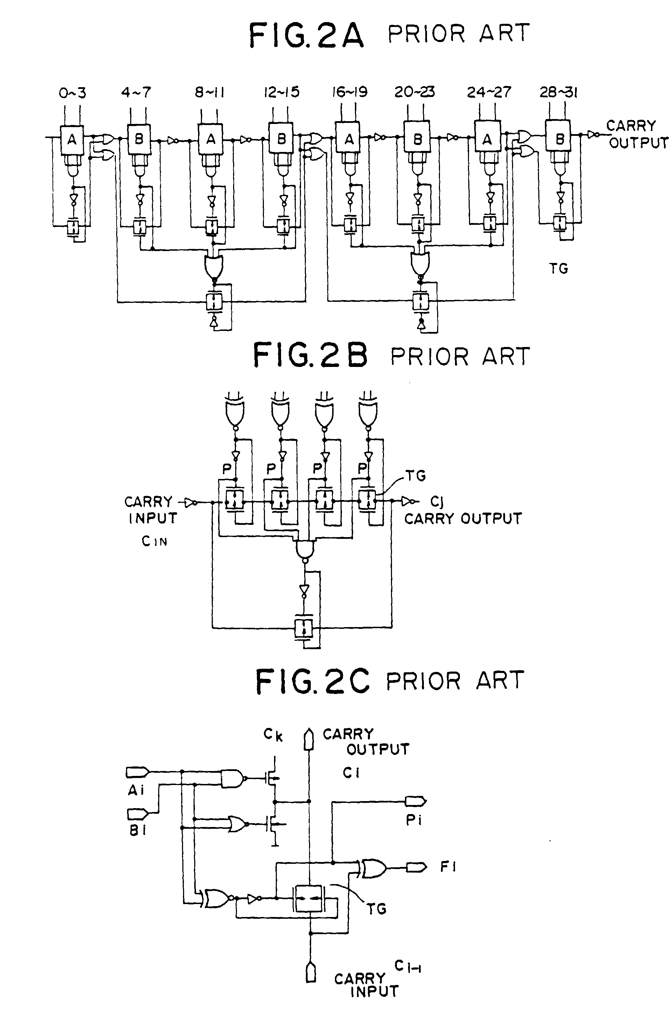

FIGS.2A through 2C are views of a conventional Manchester type carry adder. FIG.2A shows a 32-bit full adder, which includes positive/negative logic blocks A and B each including a full adder amounting to 4 bits. FIG.2B shows a carry bypass circuit used in the logic block of FIG.2A. The illustrated carry bypass circuit includes inverters and transfer gates TG, and outputs a carry signal Cj by bypassing, for every four bits, a real carry signal $C_{IN}$ supplied from the lower-order digit. Transfer gates may be constituted by complementary metal oxide semiconductor (CMOS) transistors each having a gate length equal to or less than 1.5 [μm].

FIG.2C illustrates a positive logic full adder out of 4-bit full adders used in the logic block of FIG.2A. When a combination of input data Ai and Bi (Ai, Bi) is (0, 1) or (1,0), the full adder is kept in a waiting state where it waits for the supply of the real carry signal $C_{i-1}$ propagated from the lower-order bit. In the case where all the four combinations of Ai and Bi are (0, 1) or (1, 0) in the 4-bit full adder, by bypassing the real carry signal $C_{IN}$ through the bypass circuit of FIG.2B, it becomes possible to shorten a critical path where the real carry signal ($Cj = C_{IN}$) is propagated through all the transfer gates amounting to 4 bits. In addition, bypass circuits BP1 and BP2 (FIG.2A) are provided for two 12-bit portions, each of which consists of three blocks each having 4 bits as a unit. Thereby, it is possible to propagate the carry signal Cj at high speeds.

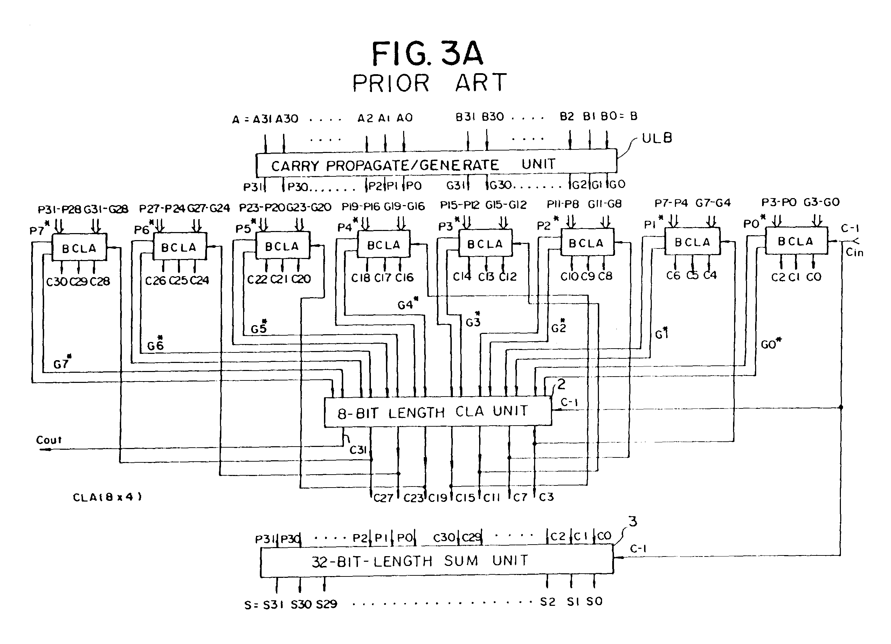

FIGS.3A through 3C illustrate a conventional 32-bit two-stage carry look ahead adder, which is also known as one of the multiple bit parallel full adders. Referring to FIG.3A, a block labeled ULB is a carry propagate/generate unit, and a block labeled BCLA is a 4-bit-length block carry look ahead unit. The illustrated adder also includes 8-bit-length carry look ahead (CLA) units 2, and a 32-bit-length sum unit 3. Each of the binary numbers A and B is represented with 32 digits such that A = A0 - A31 and B = B0 - B31. Pi (=P0 - P31) is a carry propagate signal, and Gi (=G0 - G31) is a carry generate signal. The carry propagate signal Pi is defined as $Pi = Ai \oplus Bi$, and the carry generate signal Gi is defined as $Gi = Ai \cdot Bi$. Si (=S0 - S31) is a digit of the sum output signal (S = A + B).

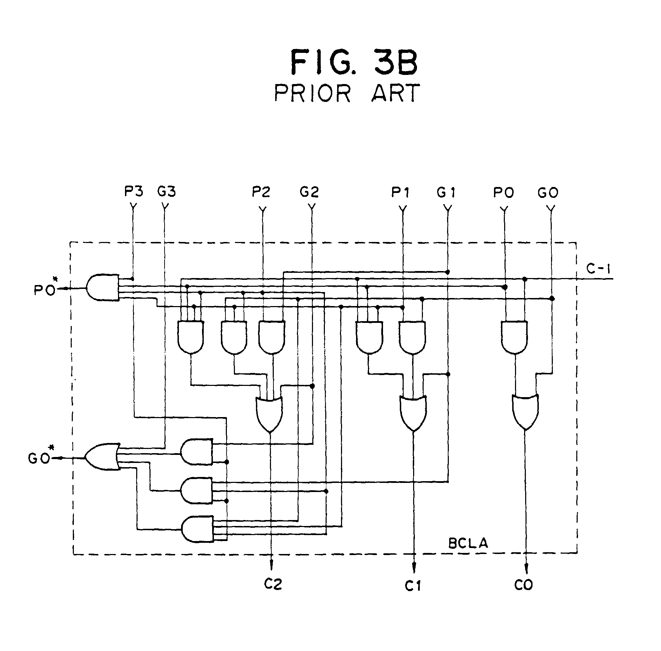

FIG.3B shows the structure of the 4-bit-length block carry look ahead unit BCLA with respect to a unit consisting of the zeroth bit to the third bit. As shown, the block carry look ahead unit BCLA includes logic gates such as AND gates, OR gates, and receives carry propagate signals P0 - P3 for the zeroth bit (digit) to third bit (digit), carry generate signals G0 - G3 for the zeroth bit to the third bit, and the real carry signal $C_{-1}$ propagated from the digit which is one digit lower than the lowest-order digit of the illustrated block. Then the carry look ahead unit BCLA generates, from these input signals, a block look ahead carry propagate signal P0*, a block look ahead carry generate signal G0*, and real carry signals C0, C1, and C2.

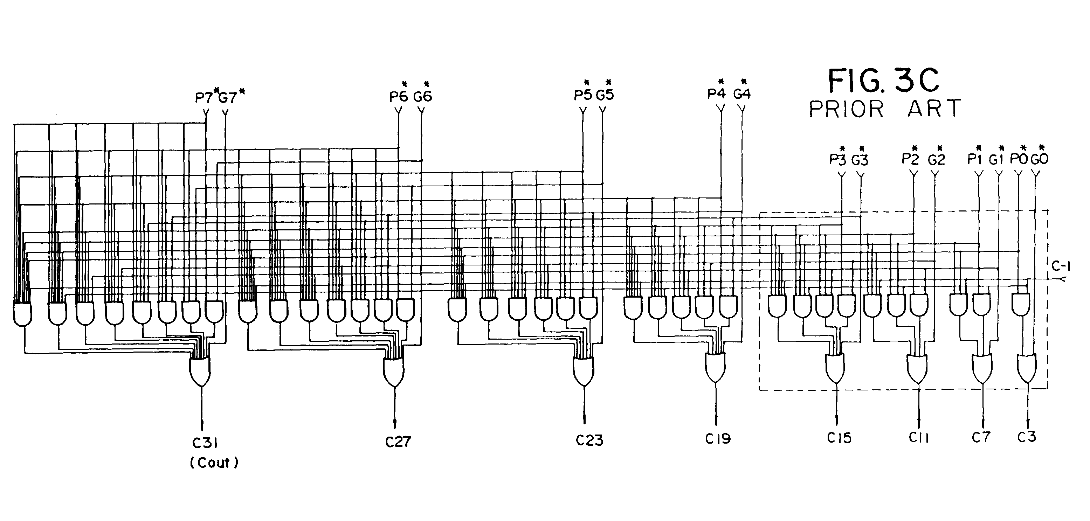

FIG.3C shows the structure of the 8-bit-length CLA unit. The illustrated CLA unit receives block look ahead carry propagate signals P0* to P7* relating to the zeroth to seventh bits, the block look ahead carry generate signals G0* - G7* relating to the zeroth to seventh bits, and the real carry signal $C_{-1}$ propagated from the digit which is one digit lower than the lowest-order digit of the illustrated CLA unit. Then the CLA unit generates, from these input signals, real carry signals C3, C7, C11, ..., C27 and C31 for every four digits. The CLA unit is made up of 2 to 9-input AND gates (or NAND gates), and 2 to 9-input OR gates (or NOR gates). In an actual circuit configuration of the CLA unit, a logic gate having 5 inputs or over, such as a 9-input AND gate is configured with combination of gates having smaller numbers of inputs. For example, a 9-input AND gate is constructed with four 3-input AND gates (or three 3-input NAND gates and one 3-input NOR gate).

The aforementioned carry select adder needs an extremely large number of structural elements with an increase of digits to be processed at a time, because the carry selectors CS must contain a more-than-linearly increased number of elements with the increase of processing digits. Furthermore, the adder needs to contain more elements than twice that of the ripple carry adder, to generate two sets of signals $S_i(1)$, $S_i(0)$ and the real sum signal $S_i$. Additionally, the conventional carry select adder causes a considerabley large delay in processing time.

The aforementioned Manchester type carry adder may be constructed by a small number of structural elements, as compared with the carry select adder. However, there are the following disadvantages. As described previously, this type includes transfer gates directly cascaded by four stages or over, each of which is constituted by CMOS transistors. In this case, a signal waveform becomes dull, which arises from series resistance of CMOS transistors as well as junction capacitance between source and drain thereof. For these reasons, the processing speed is not so high. As a result, a large amount of power is consumed irrespective of a reduced number of structural elements.

The aforementioned 32-bit two-stage carry look ahead adder needs a large number of logic gates, which leads to an increase in time taken to propagate the carry signal. Additionally, the processing speed decreases with an increase of the fan-in number. Further, it takes extremely long to obtain the operation result for the following reason. That is, the carry signals $C_0$ - $C_{31}$ relating to all the digits are propagated through BCLA $\rightarrow$ CLA $\rightarrow$ BCLA after the carry generate signals $G_i$ and the carry propagate signals $P_i$ are applied to the circuit. Thereafter, the signal processing by the 32-bit-length sum unit 3 is carried out, and then the sum output signal $S_i$ (= $S_0$ - $S_{31}$) is obtained.

An improvement on carry signal processing has been proposed in Japanese Laid-Open Patent Publication No. 57-147754. The proposed improvement is illustrated in FIG.4. The illustrated improvement is a 44-bit adder. The feature of the improvement is that the number of digits to be processed in partitioned adders CSAi (i = 1 to 8) increases towards higher-order digits, or in other words, increases with an increase of 'i'. For example, the partitioned adder CSA1 consists of a single adder AD to which digits $A_0$ and $B_0$ are supplied, and the carry select adder CSA8 consists of 8 adders to which corresponding digits $A_{36}$, $B_{36}$ through $A_{43}$, $B_{43}$ are supplied.

The carry signals $C_0^1$ and $C_0^0$ are output from the partitioned adder CSA1 with a delay time of 1D after the carry propagate and generate signals $P_i$ and $G_i$ are generated. 'D' is a unit delay time taken for a signal to pass through a transfer gate. In this way, the carry signals are output from the partitioned adder CSAi with a delay time of iD. The real carry signal $C_0$ is determined with a total delay time of 2D. That is, the carry signals $C_0^1$ and $C_0^0$ are calculated beforehand with respect to the case where the real carry signal $C_{IN}$ is '1' which is supplied from the digit which is one digit lower than the lowest-order digit, and the case where the real carry signal $C_{IN}$ is '0'. It takes a delay time of ID to carry out this calculation. Then, a multiplexer MPX5 relating to the zeroth digit selects one of the carry signals $C_0^1$ and $C_0^0$ on the basis of the value ('1' or '0') of the real carry signal $C_{IN}$. A delay time of 1D is needed for this selection. As a result, the total delay time is 2D to obtain the real carry signal CO relating to the zeroth digit. The real carry signal $C_0$ thus obtained is supplied to a multiplexer MPX5 associated with the partitioned adder CSA2. The carry signals $C_2^1$ and $C_2^0$ are output from the partitioned adder CSA2 with a total delay time of 2D. At this time, the real carry signal $C_0$ is determined as described previously. Therefore, the multiplexer MPX5 associated with the partitioned adder CSA2 selects either the carry signal $C_2^1$ or $C_2^0$ on the basis of the value of the real carry signal $C_0$. In this way, the carry signal is sequentially determined. It takes a delay time of 10D to obtain the real carry signal $C_{43}$ relating to the highest-order digit. This delay time corresponds to a total time taken to obtain the summation result.

The above-mentioned improvement presents a relatively high-speed. However, as the number of digits to be processed increases, a time taken to obtain the operation result increases drastically.

There is also known from EP-A-O 123 921 a circuit arrangement for accelerated carry formation in an adder device. The carry throughput time according to this art is shortened by forming two alternative carries, group-wise, from the sums of the operands in first combinational logic units, the actual result carries being selected therefrom and from a decision logic unit as a function of the other group carries. These result carries are supplied to second combinational logic units at whose inputs the operands to be combined are applied. Under control of the result carries, the operands are combined group-wise with one another or, respectively, the final result is selected from two alternative intermediate results.

## SUMMARY OF THE INVENTION

It is therefore a general object of the present invention to provide a novel and useful logic circuit having carry select adders in which the aforementioned disadvantages are eliminated.

A more specific object of the present invention is to provide a logic circuit having carry select adders capable of outputting the operation result at higher speeds.

Another object of the present invention is to provide a logic circuit having carry select adders which can operate rapidly even when the number of digits to be processed is increased.

The above objects of the present invention can be achieved by an operation circuit comprising N partitioned adders provided for every n bits, n < M; N $\geq$ M/n, each generating a pair of provisional carry signals $C_{ns-1}(1)$ and $C_{ns-1}(0)$ relating to the s-th partitioned adder from the partitioned adder relating to the lowest-order digit, and generating real sum signals Fj amounting to n bits, the paired provisional carry signals being calculated supposing a first case where the carry of a lower-order digit is '1' and a second case where the carry of the digit is '0'; and means for generating real carry signals Ck and $C_{ns-1}$ relating to the partitioned adders. The above means comprises first means and second means. The first means selects one of paired provisional carry signals $C_{ns-1}(1)$ and $C_{ns-1}(0)$ supplied from the s-th partitioned adder, depending on the value of the real carry signal $C_{(s-1)n-1}$ supplied from the (s-1)th partitioned adder. The selected one of the provisional carry signals is the real carry signal $C_{ns-1}$ to be propagated from the s-th partitioned adder. The second means generates a pair of provisional carry signals Ck*(1) and Ck*(0), k = n(s + 1) - 1, n(s + 2) -1, ..., n(s + $\ell$) - 1, by referring to paired provisional carry signals (Cr(1) or Cr*(1); r = k - n = ns - 1, and Cr(0) or Cr* (0); r = k - n = ns - 1, which are lower by n digits than the ones to be generated. The second means generates $\ell$ real carry signals Ck at the same time by selecting either the provisional carry signal Ck*(1) or Ck*(0), depending on the real carry signal $C_{(s-1)n-1}$ relating to a digit which is one digit lower than the lowest-order digit of the s-th partitioned adder.

The above objects of the present invention can also be achieved by an operation circuit for M-bit parallel full addition, comprising N partitioned adders provided for every n bits, n < N; N $\geq$ N/n, each generating a pair of provisional carry signals $C_{ns-1}(1)$ and $C_{ns-1}(0)$ relating to the s-th partitioned adder from the partitioned adder relating to the lowest-order digit, and generating a pair of provisional sum signals Fj(1) and Fj(0) each amounting to n bits, the paired provisional carry signals and the paired provisional sum signals being calculated supposing a first case where the carry of a lower-order digit is '1' and a second case where the carry of the digit is '0'; and means for generating real carry signals Ck and $C_{ns-1}$, and real sum signals Fj relating to the partitioned adders. The above means comprises first means and second means. The first means selects one of paired provisional carry signals $C_{ns-1}(1)$ and $C_{ns-1}(0)$ and selects one of paired provisional sum signals Fj(1) and Fj(O) supplied from the s-th partitioned adder, depending on the value of the real carry signal $C_{(s-1)n-1}$ supplied from the (s-1)th partitioned adder, the selected one of the provisional carry signals being the real carry signal $C_{ns-1}$ to be propagated from the s-th partitioned adder, the selected one of the provisional sum signals being the real sum signal amounting to n bits relating to the s-th partitioned adder. The second means generates a pair of provisional carry signals Ck*(1) and Ck*(0), k = n(s + 1) - 1, n(s + 2) -1, ..., n(s $\ell$) ) - 1, by referring to paired provisional carry signals Cr(1) or Cr*(1) ; r = k - n = ns - 1, and Cr(0) or Cr(0); r = k - n = ns - 1, which are lower by n digits than the ones to be generated, and for generating $\ell$ real carry signals Ck, and real sum signals Fj amounting to n$\ell$ digit at the same time by selecting either the provisional carry signal Ck*(1) or Ck*(0). Then the second means selects either the provisional sum signals Fj(1) or Fj(0), depending depending on the real carry signal $c_{(s-1)n-1}$ relating to a digit which is one digit lower than the lowest-order digit of the s-th partitioned adder.

Other objects, features, and advantages of the present invention will become apparent from the following detailed description when read in conjunction with the accompanying drawings.

BRIEF DESCRIPTION OF THE DRAWINGS

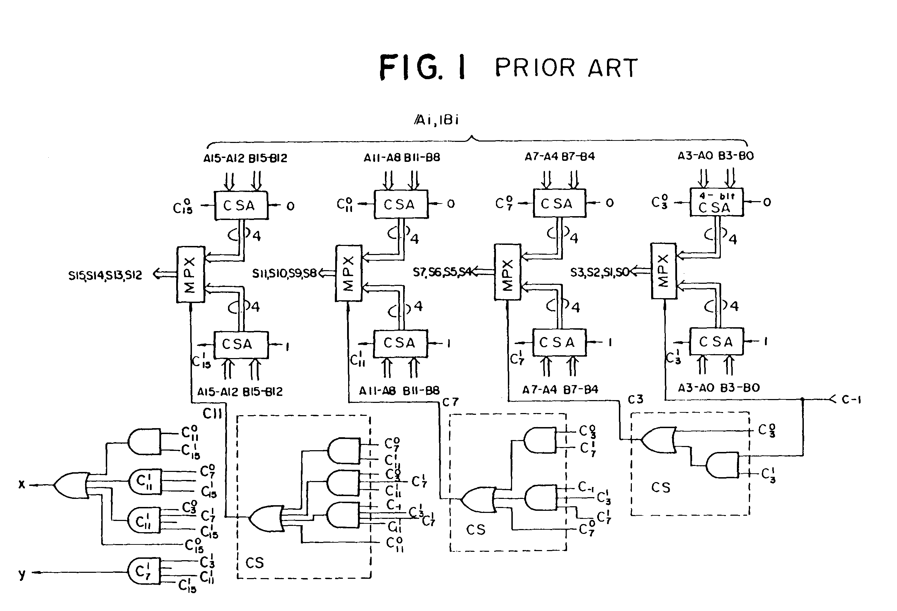

FIG.1 is a block diagram of a conventional 16-bit carry select adder;
FIGS.2A through 2C are views illustrating a conventional Manchester type carry adder;
FIGS.3A through 3C are views illustrating a conventional 32-bit-length two-stage carry look ahead adder;
FIG.4 is a block diagram of still another example of conventional multiple bit parallel full adders;
FIG.5 is a block diagram of a first preferred embodiment of the present invention;
FIGS.6A and 6B are views illustrating a partitioned adder used in the embodiment of FIG.5;
FIGS.7A and 7B are views illustrating a selector including transfer gates used in the embodiment of FIG.5;
FIGS.8 is a circuit diagram illustrating a chain of transfer gates and an inverter;
FIGS.9A and 9B are views illustrating a first multiplexer used in the embodiment of FIG.5;
FIG.10A and 10B are views illustrating a second multiplexer used in the embodiment of FIG.5
FIG.11 is a block diagram of a second preferred embodiment of the present invention;
FIGS.12A through 12D are views illustrating a partitioned adder used in the embodiment of FIG.11;
FIG.13 is a block diagram showing the second embodiment together with a carry propagate/generate circuit;
FIGS.14A and 14B are views illustrating a first multiplexer used in the embodiment of FIG.11;
FIGS.15A and 15B are views illustrating a second multiplexer used in the embodiment of FIG.11.

DESCRIPTION OF THE PREFERRED EMBODIMENTS

A description is given of a first preferred embodiment of the present invention.

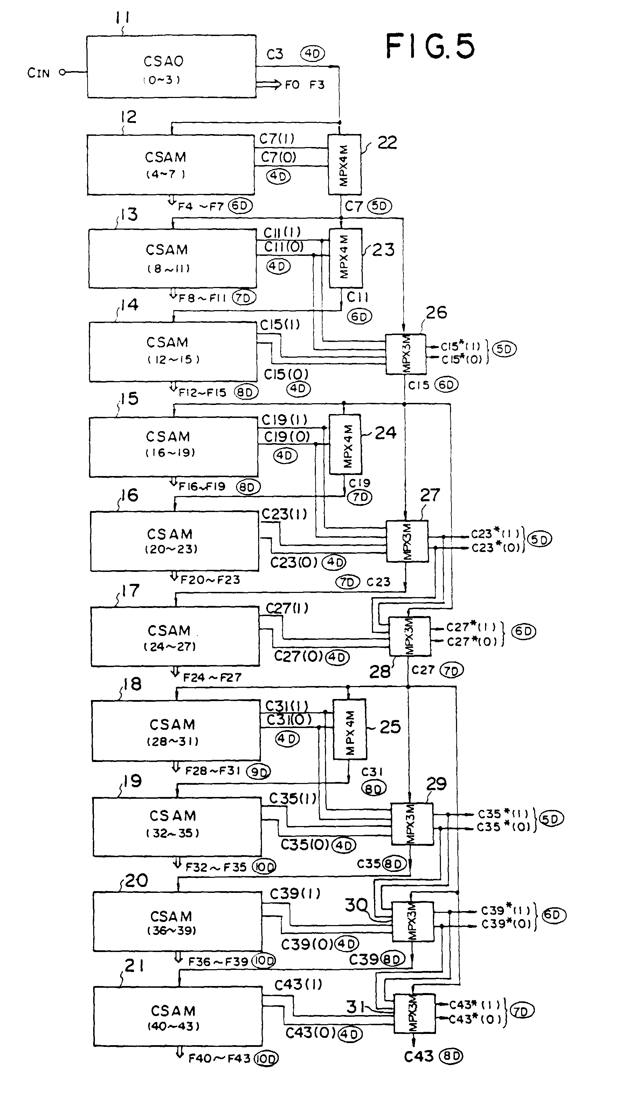

FIG.5 is a block diagram of a first preferred embodiment of the present invention. The first embodiment is a 44-bit adder and includes partitioned carry adders 11 through 21 labeled CSAM, first multiplexers 22 through 25 labeled MPX4M, and second multiplexers 26 through 31 labeled MPX3M.

Each of the partitioned adders 11 through 21 is a 4-bit-length partitioned adder. The partitioned adder 11 is labeled CSAO, and the remaining partitioned adders 12 through 21 are labeled CSAM. The carry signal $C_{IN}$ propagated from the digit which is one digit lower than the lowest-order digit, is supplied to the carry select adder 11, which outputs the real carry signal C3 and real sum signals FO through F3 relating to the partitioned adder 11. The real carry signal C3 is supplied to the multiplexer 22 and the partitioned adder 12. It is noted that it takes a delay time of 4D to obtain the real carry signal C3.

The partitioned adder 12 outputs carry signals C7(1) and C7(0) with a delay time of 4D. Signals Cj(1) and Cj(0) (j = 0 - 43) are provisional carry signals, which are then subjected to selection based on the value of the real carry signal propagated from a lower-order digit, and are then propagated to higher-order digits. The provisional carry signal C7(1) is a carry signal obtained when the real carry signal C3 is assumed to be '1', and the provisional carry signal C7(0) is a carry signal obtained when the real carry signal C3 is assumed to be '0'. The provisional carry signals C7(1) and C7(0) are supplied to the multiplexer 22, which selects one of the provisional carry signals C7(1) and C7(0) on the basis of the value of the real carry signal C3. Since it takes a delay time of 1D to make such selection, the real carry signal C7 is determined with a total delay time of 5D. On the other hand, real sum signals F4 through F7 relating to the fourth digit to the seventh digit, are output from the partitioned adder 12 with a total delay time of 6D. That is, it takes a delay time of 2D to obtain the real sum signals F4 through F7 after the real carry signal C3 is supplied thereto. The real carry signal C7 is supplied to the multiplexer 23 and the partitioned adder 13. It is noted that the real carry signal C7 is also supplied to the multiplexer 26.

The multiplexer 23 operates in the same way as the multiplexer 22. The partitioned adder 13 operates in the same way as the partitioned adder 12, and outputs provisional carry signals C11(1) and C11(0) with a total delay time of 4D. The partitioned adder 13 also generates real sum signals F8 through FII with a total delay time of 7D. The multiplexer 23 selects one of the provisional carry signals C11(1) and C11(0) on the basis of the value of the real carry signal C7 supplied from the multiplexer 22. The provisional carry signal selected by the multiplexer 23 is the real carry signal C11, and is supplied to the partitioned adder 13.

It is noted that the provisional carry signals C11(1) and C11(0) are also supplied (propagated) to the multiplexer 26, to which supplied are provisional carry signals C15(1) and C15(0) derived from the partitioned adder 14 with a delay time of 4D. This is intended to calculate candidates for the value of real carry signal C15 to be propagated upwards by using the provisional carry signals C11(1) and C11(0) supplied from the partitioned adder 13 before the real carry signal C11 is determined, and to immediately determine the value of the real carry signal C15 when the real carry signal C7 propagated from the partitioned adder 12 is determined.

The multiplexer 26 generates a pair of provisional signals C15*(1) and C15*(0) with a total delay time of 5D by using the above-mentioned provisional carry signals. It is noted that Cj*(1) and Cj*(0) are provisional signals generated by the multiplexers. It is noted that it takes a total delay time of 5D to obtain the provisional carry signals C15*(1) and C15*(0). Therefore, the multiplexer 26 determines the real carry signal C15 with a total delay time of 6D on the basis of the value of the real carry select signal C7.

The real carry signal C15 is supplied to the partitioned adder 15, and the multiplexers 24, 27 and 28. The partitioned adder 15 operates in the same way as the partitioned adders 12, 13 and 14, and the multiplexer 24 operates in the same way as the multiplexers 22 and 23. The multiplexer 27 is supplied with provisional carry signals C19(1) and C19(0) supplied from the partitioned adder 15, and provisional carry signals C23(1) and C23(0) supplied from the partitioned adder 16. Then the multiplexer 27 generates a pair of provisional carry signals C23*(1) and C23*(0) from the supplied selected carry signals C19(1), C19(0), C23(1) and C23(0). It takes a total delay of 5D to obtain a pair of provisional carry signals C23*(1) and C23*(0). Then, the multiplexer 27 determines the real carry signal C23 with a total delay time of 7D on the basis of the value of the real carry signal C15 which is generated with a total delay time of 6D.

It is noted that the provisional carry signals C23*(1) and C23*(0) generated by the multiplexer 27 are supplied to the multiplexer 28. This means that the provisional carry signals C19(1) and C19(0) are provisionally propagated up to the twenty-seventh digit. Then the multiplexer 28 generates a pair of provisional carry signals C27*(1) and C27*(0) from the provisional carry signals C23*(1) and C23*(0) supplied from the multiplexer 27 and the provisional carry signals C27(1) and C27(0) supplied from the partitioned adder 17. It takes a total delay time of 6D to obtain the provisional carry select signals C27*(1) and C27*(0). This is because it takes a total delay time of 5D to obtain the provisional carry signals C23*(1) and C23*(0), and it takes a delay time of 1D to generate (select) the provisional select signals C27*(1) and C27*(0) after the provisional carry signals C23*(1) and C23*(0) are generated. Then the multiplexer 28 determines the real carry signal C27 when the real carry signal C15 is supplied thereto. It takes a delay time 1D to make this determination (selection). The real carry signal C27 thus determined is supplied to the partitioned adder 18, the multiplexers 25, 29, 30 and 31. It should be appreciated that when the real carry signal C15 is determined, the real carry signals C19, C23 and C27 are immediately determined.

The multiplexer 25, 29 and 30 operate in the same way as the aforementioned multiplexers 24, 27 and 28, respectively. The multiplexer 29 generates a pair of provisional carry signals C35*(1) and C35*(0) from provisional carry signals C31(1) and C31(0) supplied from the partitioned adder 18, and provisional carry signals C35(1) and C35(0) supplied from the partitioned adder 19. Then, the real carry signal C35 is determined by the multiplexer 29 with a total delay time of 8D. The provisional carry select signals C35*(1) and C35*(0) are supplied to the multiplexer 30, to which provisional carry signals C39(1) and C39(0) are supplied from the partitioned adder 20. Then the multiplexer 30 generates a pair of provisional carry signals C39*(1) and C39*(0), depending on the value of the input carry signals C35*(1), C35*(0), C39(1) and C39(0). Then, the multiplexer 30 determines the real carry signal C39 on the basis of the value of the real carry signal C27. It takes a total time of 8D to obtain the real carry signal C39. The provisional carry signals C39*(1) and C39*(0) are supplied to the multiplexer 31, to which provisional carry signals C43(1) and C43(0) are supplied. Then the multiplexer 31 generates a pair of provisional carry signals C43*(1) and C43*(0) from the input carry signals C39*(1), C39*(0), C43(1) and C43(0). The provisional carry signals C43*(1) and C43*(0) are not propagated upwards in the embodiment. Then, the real carry signal C43 is determined with a total delay time of 8D on the basis of the value of the real carry signal C27 supplied from the multiplexer 28.

The above-mentioned operation with respect to the multiplexers (MPX4M) can be described in the general form as follows. Partitioned adders are arranged for every n bits. A pair of provisional carry signals $C_{ns-1}(1)$ and $C_{ns-1}(0)$ (also represented as Ck*(1) and Ck*(0)) is made propagated to higher-order digits by m digits (m = n$\ell$; $\ell$ is a positive integer), before real carry signal $C_{(s-1)n-1}$ propagated from the digit which is one digit lower than the lowest-order digit in the s-th partitioned adder which is positioned upwards by s from the partitioned adder relating to the lowest-order digit, reaches the s-th partitioned adder. Thereby, a pair of provisional carry signals Ck*(1) and Ck*(0) (k = n(s + 1) - 1, n(s + 2) -1, ..., n(s + $\ell$) - 1) is generated. Thereafter, when the real carry signal $C_{(s-1)n-1}$ relating to the digit which is one digit lower than the s-th partitioned adder, is determined, $\ell$ + 1 real carry signals Ck, $C_{ns-1}$ are selected and determined at the same time.

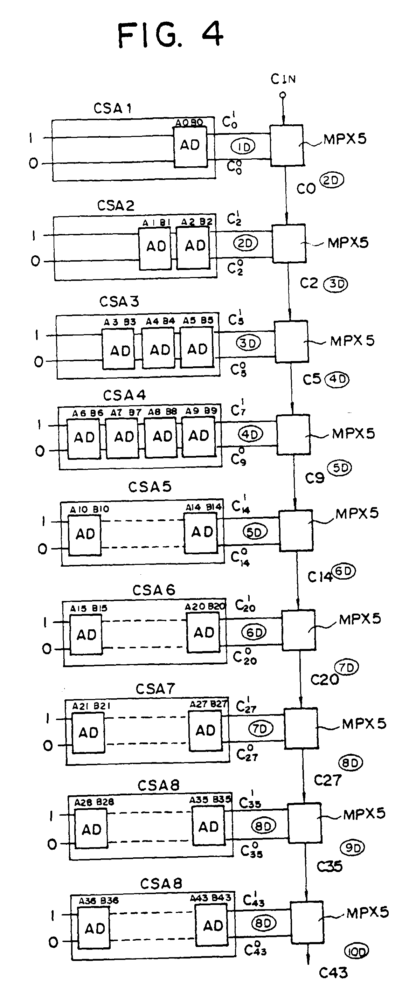

Table 1 shows the relationship between the highest digit to be processed (MSB; the most significant bit) and corresponding delay time of the sum signal associated with MSB, obtained by conventional adder of FIG.4 and the first embodiment of the present invention.

Table 1

| Embodiment | | Prior Art | |
|---|---|---|---|
| MSB | Delay time | MSB | Delay time |
| 4 - 7 | 6D | 6 - 9 | 6D |
| 8 - 11 | 7D | 10 - 14 | 7D |
| 12 - 19 | 8D | 15 - 20 | 8D |
| 20 - 31 | 9D | 21 - 27 | 9D |
| 32 - 47 | 10D | 28 - 35 | 10D |
| 48 - 67 | 11D | 36 - 44 | 11D |
| 68 - 91 | 12D | 45 - 54 | 12D |
| 92 - 119 | 13D | 55 - 65 | 13D |
| 120 - 151 | 14D | 66 - 77 | 14D |
| | | 78 - 90 | 15D |
| | | 91 - 104 | 16D |
| | | 105 - 119 | 17D |
| | | 120 - 135 | 18D |
| | | 136 - 152 | 19D |

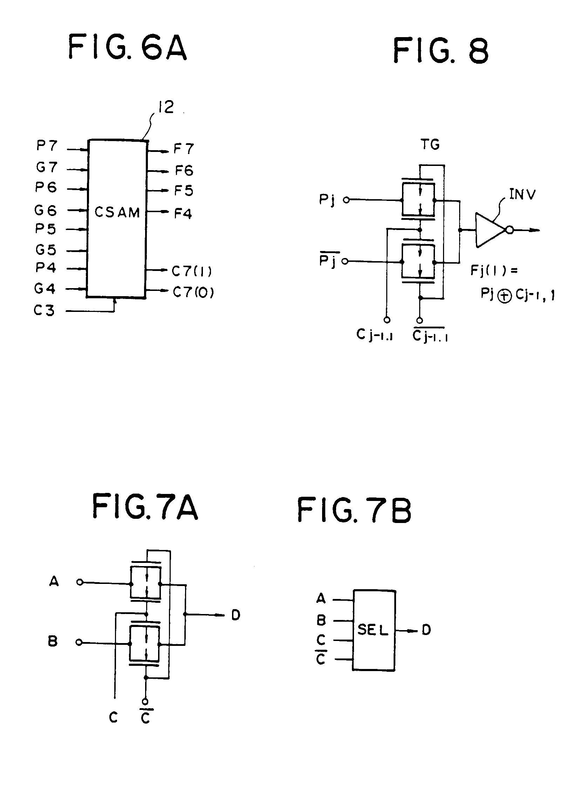

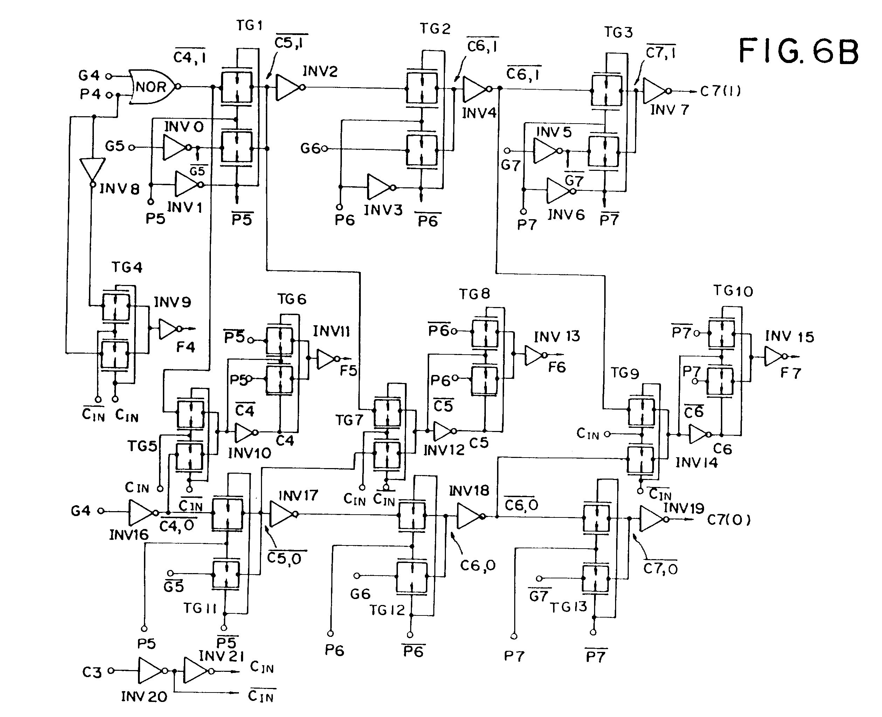

A description is given of the structure for the partitioned adder 12 with reference to FIGS.6A 6A and 6B. The description about the structure of FIGS.6A 6A and 6B holds true for the other partitioned adders 13 through 21.

Referring to FIG.6A, the partitioned adder 12 receives the carry propagate signals P4 through P7 relating to the fourth digit through the seventh digit, the carry generate signals G4 through G7 relating thereto, and the real carry signal C3 supplied from the partitioned adder 11, and then generates the real sum signals F4 through F7, and the provisional carry signals C7(1) and C7(0). The carry propagate signals P4 through P7 are defined by a formula that Pj = Aj $\oplus$ Bj (j = 4 to 7 in this case). The carry generate signals G4 through G7 are defined by a formula such that Gj = Aj·Bj (j = 4 to 7 in this case). Signals $\overline{P4}$ through $\overline{P7}$ are inverted carry propagate signals obtained by inverting the carry propagate signals P4 through P7. Signals $\overline{G4}$ through $\overline{G7}$ are inverted carry generate signals obtained by inverting the carry generate signals G4 through G7. Signals Cj,1 and Cj,0 are carry signals which are generated by and propagated from a chain of a transfer gate and inverter relating to a digit which is one bit lower than each digit. Signals $\overline{Cj,1}$

and $\overline{Cj,0}$ are inverted carry signals which are generated by and propagated from a chain of a transfer gate and inverter relating to a digit which is one bit lower than each digit.

The partitioned adder 12 includes transfer gates TG1 through TG13 and inverters INVO through INV21 associated therewith. Each of the transfer gates TG1 through TG13 consists of a pair of transfer gates, and functions as a selector as shown in FIGS.7A and 7B. Hereafter, a transfer gate TGi (i = 1, 2, ...) means a selector consisting of a pair of transfer gates. The outputs of the pair of transfer gates forms a wired-OR. The selector SEL selects one of the two inputs A and B, depending on the value of the control signal C. When C = 1, the output D is equal to A, and on the other hand, when C = 0 the output D is equal to B. The transfer gates TG1 through TG3 and related inverters INV0 through INV7 form a circuit portion, which generates the provisional carry signal C7(1) to be propagated to the multiplexer 22 (FIG. 5). It is noted that a carry signal Cj is obtained by the following formula: $Cj = Gj + Cj-1 \oplus Pj$.

The transfer gates TG4 through TG10 and related inverters INV8 through INV15 form a circuit portion, which generates the real sum signals F4 through F7. As shown in FIG.8, the combination of a transfer gate TG and an inverter INV forms an exclusive-OR circuit. That is, a real sum signal Fj is represented as follows: $Fj(1) = Pj \oplus Cj-1,1$. For example, the real sum signal F4 is generated by the transfer gate TG4 and the inverter INV9. The transfer gate TG4 is supplied with the carry propagate signal P4 and inverted carry propagate signal $\overline{P4}$, and is controlled by the real carry signal $C_{IN}$ and inverted signal $\overline{C_{IN}}$. The inverted real carry signal $\overline{C_{IN}}$ is a signal obtained by inverting the real carry signal C3 through the inverter INV20, and the real carry signal $C_{IN}$ is a signal obtained by inverting the inverted real carry signal $\overline{C_{IN}}$ through the inverter 21. The real sum signal F5 is generated by the combination of the transfer gates TG5 and TG6 and the inverters INV10 and INV11. The transfer gate TG5 is supplied with the carry signals $C_{IN}$ and the inverted carry signal $\overline{C_{IN}}$. The transfer gate TG5 selects one of the inverted carry signal $\overline{C4,1}$ supplied from an NOR gate NOR and the inverted carry signal $\overline{C4,0}$ supplied from the inverter INV16. A selected carry signal $\overline{C4}$ is supplied to a connection point of the transfer gate TG6, and also control terminals thereof through the inverter INV10. The transfer gate TG6 selects either the carry propagate signal P5 or the inverted carry propagate signal $\overline{P5}$. It can be seen from the above that the real sum signal F5 is determined with a delay time of 2D necessary for selection in the transfer gates TG5 and TG6 after the real carry signal C3 is determined. The selected signal passes through the inverter INV11, the output of which is the real sum signal F5. The real sum signals F6 and F7 are generated in the same way as the real sum signal F5.

The transfer gates TG11 through TG13 and related inverters INV16 through INV19 form a circuit portion, which generates the provisional carry signal C7(0) which is to be supplied to the multiplexer 22 (FIG.5). The above-mentioned structure of the partitioned adder 12 is applied to each of the other partitioned adders 13 through 21.

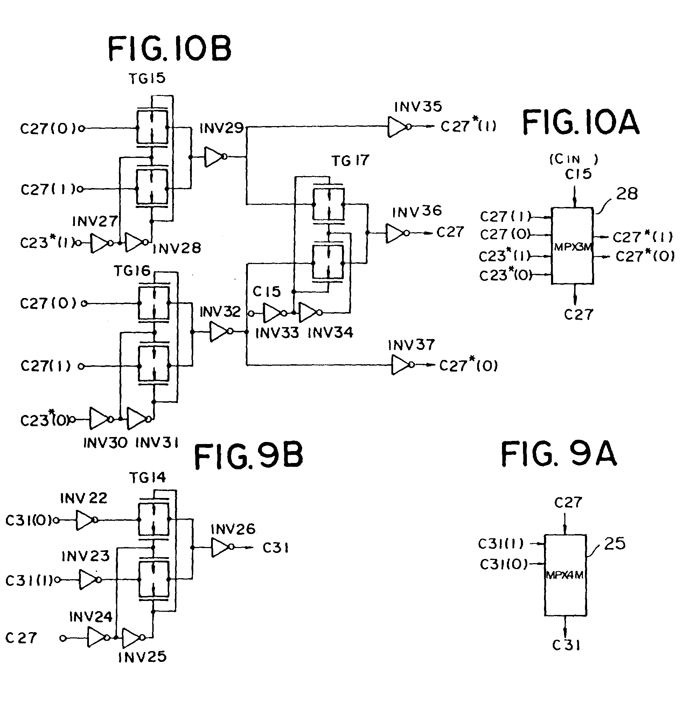

FIGS.9A and 9B show an example of the structure for the multiplexer (MPX4M) 25 relating to the partitioned adder 18. The illustrated structure may be applied to each of the multiplexers of the same type 22 through 24. The multiplexer 25 selects one of the provisional carry signals C31(1) and C31(0) supplied from the partitioned adder 18, depending on the value of the real carry signal C27 supplied from the multiplexer 28. As shown in FIG.9B, the multiplexer 25 is made up of a transfer gate TG14 and inverters INV22 through INV 26.

FIG.10A and 10B show an example of the structure for the multiplexer (MPX3M) 28 relating to the partitioned adder 17. The illustrated structure may be applied to each of the multiplexers of the same type 26, 27, 29, 30 and 31. The multiplexer 28 has a first circuit portion, which is provided with respect to each of the provisional carry signals C23*(1) and C23*(0), and functions to select either the provisional carry signal C27(0) or C27(1) beforehand by referring to values of '1' and '0' of the provisional carry signals C23*(1) and C23*(0). The selected carry signals with respect to the provisional carry signals C23*(1) and C23*(0) are output as the provisional carry signals C27*(1) and C27*(0).

Further, the multiplexer 28 has a second circuit portion, which functions to determine the real carry signal C27 by selecting one of the carry signals supplied from the transfer gates TG15 and TG16 on the basis of the value ('1' or '0') of the real carry signal C15 propagated from the multiplexer 26 (FIG.5), when the real carry signal C15 is determined. The real carry signal C15 is a signal which is shifted from a partitioned adder (partitioned adder 14 in this case) which is spaced towards lower-order digits from the partitioned adder of concern (partitioned adder 17) by an amount corresponding to two or more partitioned adders. In this manner, the first and second circuit portions from a two-stage circuit in view of operation.

Referring to FIG.10B, the above-mentioned first circuit includes the transfer gates TG15 and TG16, and inverters INV27, INV28, INV30 and INV31. The transfer gate TG15 is supplied with the carry signals C27(1) and C27(0). The transfer gate TG15 selects one of the carry signals C27(1) and C27(0), depending on the value of the provisional carry signal C23*(1). The transfer gate TG16 selects one of the provisional carry signals C27(1) and C27(0), depending on the value of the provisional carry signal C23*(0). The selected carry signal from the transfer gate TG15 passes through inverters INV29 and INV35, and is output as the provisional carry signal C27*(1). The selected carry signal from the transfer gate TG16 passes through inverters INV32 and INV37, and is output as the provisional carry signal C27*(0). The second circuit portion includes a transfer gate TG17 and inverters INV33, INV34, and INV36. The transfer gate TG17 selects one of the carry signals passing through the transfer gates TG15 and TG16, depending on the value of the real carry signal C15. The selected carry signal passes through the inverter INV36, and is output as the real carry signal C27. This is, the selected carry signal is substantially the provisional signal C*27(1) or C*27(0).

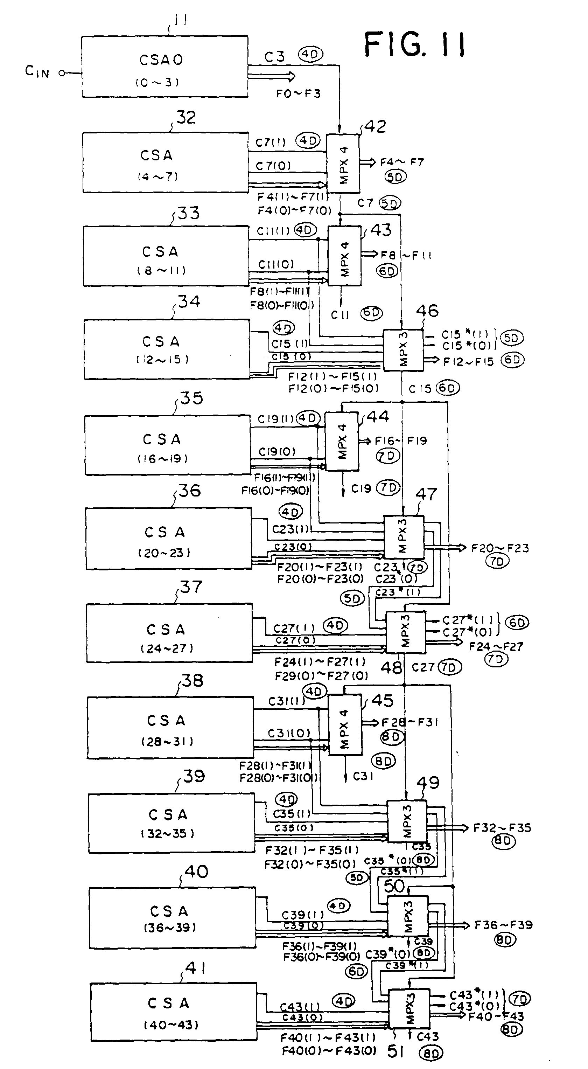

A description is given of a second preferred embodiment of the present invention with reference to FIG.11. Referring to FIG.11, the second embodiment includes partitioned adders 11, and 32 through 41, first multiplexers 42 through 45, and second multiplexers 46 through 51. Each of the partitioned adders 11, and 32 through 41 is a 4-bit-length carry select adder. The partitioned adder 11 are the same as the partitioned adder 11 shown in FIG.5. The partitioned adders 32 through 41 is of the same structure. The essential feature of the second embodiment is that provisional sum signals $F_j(1)$ and $F_j(0)$ (j = 0 - 43 in the embodiment) are generated in the partitioned adders 32 through 41, and are then supplied to corresponding multiplexers 42 through 51. That is, a pair of provisional sum signals $F_j(1)$ and $F_j(0)$ is calculated beforehand with respect to each digit, and real sum signals are determined by selecting one of the paired provisional sum signals on the basis of the value of the real carry signal propagated from a lower-order digit. The carry processing of the second embodiment is the same as that of the first embodiment except that the real carry signals $C_j$ (j = 3, 7, 11, 15, 19, 23, 27, 31, 35, 39) are not supplied to the corresponding partitioned adders 32 through 41.

The partitioned adder 32 generates two sets of provisional sum signals F4(1) through F7(1) and F4(0) through F7(0) with a delay time of 4D, together with the provisional carry signals C7(1) and C7(0). The signals thus generated are supplied to the multiplexer 42, which selects one of sets of the provisional sum signals F4(1) through F7(1) and F4(0) through F7(0) on the basis of the value of the real carry signal C3 propagated from the partitioned adder 11. The selected set of provisional sum signals are output as real sum signals F4 through F7. At this time, the real carry signal C7 is determined.

The partitioned adder 33 generates two sets of provisional sum signals F8(1) through F11(1) and F8(0) through F11(0), together with the provisional carry signals C11(1) and C11(0). The signals thus generated are supplied to the multiplexer 43, which selects one of sets of the provisional sum signals F8(1) - F11(11) and F8(0) - F11(0) on the basis of the value of the real carry signal C7 propagated from the multiplexer 42. The selected set of provisional sum signals are output as real sum signals F8 through F11. At this time, the real carry signal C11 is determined.

The partitioned adder 34 generates two sets of provisional sum signals F12(1) through F15(1) and F12(0) through F15(0), together with the provisional carry signals C15(1) and C15(0). The signals thus generated are supplied to the multiplexer 46, which selects one of sets of the provisional sum signals F12(1) - F15(1) and F12(0) - F15(0) on the basis of the value of the real carry signal C7 propagated from the multiplexer 42. The selected set of provisional sum signals are output as real sum signals F12 through F15. At the same time, the real carry signal C15 is determined. Before determining the real sum signals F11 through F15, the multiplexer 46 also generates the aforementioned the pair of provisional carry signals C15*(1) and C15*(0) on the basis of the values of paired provisional carry signals C11(1), C11(0), and C15(1), C15(0).

It can be seen from the above that the multiplexers 42 through 51 can be constructed by adding a function of selecting provisional sum signals to the multiplexers 22 through 31.

The above-mentioned structure shown in FIG.11 can be represented as follows. Partitioned adders are arranged for every n bits. A pair of provisional carry signals $C_{ns-1}(1)$ and $C_{ns-1}(0)$ (also represented as Ck*(1) and Ck*(0)) is made to propagate to higher-order digits by m digits (m = n$\ell$; $\ell$ is a positive integer), before real carry signal $C_{(s-1)n-1}$ propagated from the digit which is one digit lower than the lowest-order digit in the s-th partitioned adder which is positioned upwards by s from the partitioned adder relating to the lowest-order digit, reaches the s-th partitioned adder. Thereby, a pair of provisional carry signals Ck*(1) and Ck*(0) (k = n(s + 1) - 1, n(s + 2) -1, ..., n(s + ) - 1) is generated. Thereafter, when the real carry signal $C_{(s-1)n-1}$ relating to the digit which is one digit lower than the s-th partitioned adder, is determined, $\ell$ + 1 real carry signals Ck, $C_{ns-1}$ and real sum signals 5 Fj amounting to m + n digits are selected and determined at the same time.

Table 2 shows the relationship between the highest digit to be processed (MSB; the most significant bit) and corresponding delay time of the sum signal associated with MSB, obtained by conventional adder of FIG.4 and the second embodiment of the present invention.

## Table 2

| Embodiment | | Prior Art | |
|---|---|---|---|
| **MSB** | **Delay time** | **MSB** | **Delay time** |
| 4 - 7 | 5D | 6 - 9 | 6D |
| 8 - 15 | 6D | 10 - 14 | 7D |
| 16 - 27 | 7D | 15 - 20 | 8D |
| 28 - 43 | 8D | 21 - 27 | 9D |
| 44 - 63 | 9D | 28 - 35 | 10D |
| 64 - 87 | 10D | 36 - 44 | 11D |
| 88 - 115 | 11D | 45 - 54 | 12D |
| 116 - 147 | 12D | 55 - 65 | 13D |
| | | 66 - 77 | 14D |
| | | 78 - 90 | 15D |
| | | 91 - 104 | 16D |
| | | 105 - 119 | 17D |

## Table 2 (Contined)

| Embodiment | | Prior Art | |
|---|---|---|---|
| **MSB** | **Delay time** | **MSB** | **Delay time** |
| | | 120 - 135 | 18D |
| | | 136 - 152 | 19D |

According to the second embodiment, it takes 1D or 2D shorter than in the case of the first embodiment to obtain the real sum signal relating to each digit. Therefore, the second embodiment is more suitable for applications where extremely high-speed processing is particularly required. On the other hand, the first embodiment can be constructed by a number of structural elements smaller than that for the second embodiment, because the first embodiment is not designed to generate the provisional sum signal for each digit. Therefore, the first embodiment may be of a smaller size and less expensive.

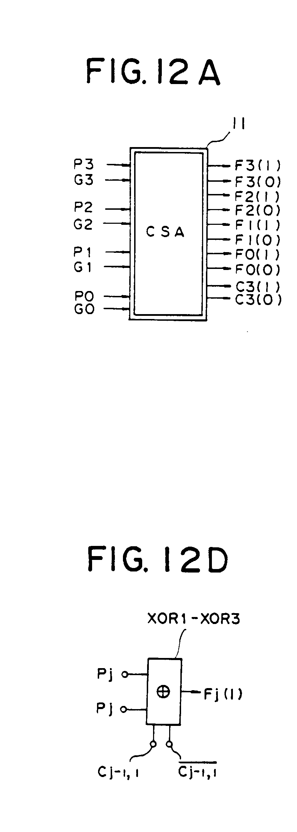

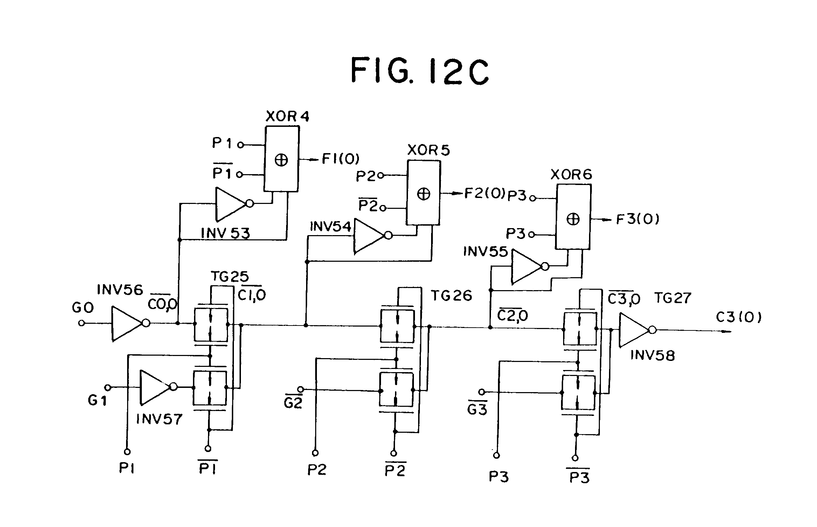

FIGS.12A through 12D are views illustrating an example of the structure for the partitioned adder 11. It is noted that in FIG.11, it is assumed that the real carry signal $C_{IN}$ is '0' for the conveniences' sake as in the first embodiment. That is, no carry signal is applied to the adder of FIG.11. In this case, the partitioned adder 11 may be formed only by the structure of FIG.12C. However, when the partitioned adder 11 is designed to actually receive the real carry digit $C_{IN}$ from the lower-order digit, the structure of FIGS.12A through 12D is used for constructing the partitioned adder 11. Of course, the entire structure shown in FIGS.12A through 12D is applied to the partitioned adders 32 through 41 as it is. Referring to FIG.12A, the partitioned adder 11 receives the carry propagate signals P0 through P3, and the carry generate signals G0 through G3, and generates the provisional sum signals F0(1) through F3(1), F0(0) through F3(0), and the provisional carry signals C3(1) and C3(0). The above holds true for the partitioned adder 11 shown in FIG.5.

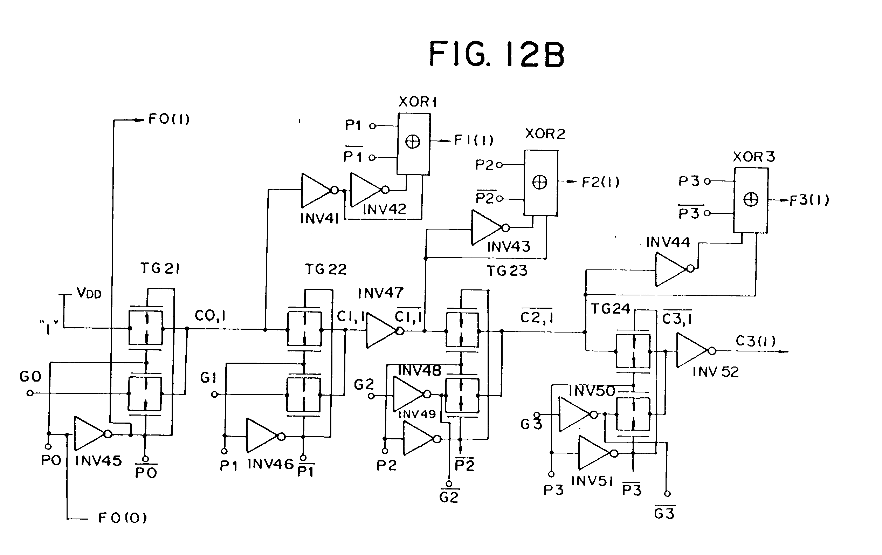

FIG.12B illustrates a circuit portion, which generates the provisional sum signals F0(1) through F3(1), and the provisional carry signal C3(1), which are obtained when the carry signal is '1' which is propagated from the digit (j = -1) which is one bit lower than the partitioned adder 11. The illustrated circuit portion is made up of exclusive-OR gates XOR1 through XOR3, inverters INV41 through INV52, and transfer gates TG21 through TG24. The provisional sum signal F0(1) is obtained at the output of an inverter INV45, to which the carry propagate signal P0 is applied. The provisional sum signals F1(1) through F3(1) are output from the exclusive-OR gates XOR1 through XOR3, respectively.

As shown in FIG.12D, each of the exclusive-OR gates XOR1 through XOR3 receives the carry propagate signal Pj and the inverted carry propagate signal $\overline{Pj}$, and the carry signal Cj-1,1 and the inverted carry signal $\overline{Cj-1,1}$ and generates the provisional sum signal Fj(1) (= Pj ⊕ Cj-1,1). Such operation holds true for other exclusive-OR gates described hereinafter.

The provisional carry signal C3(1) is generated by a circuit portion, which is made up of the transfer gates TG21 through TG24 and related inverters INV45 through INV52. The transfer gate TG21 selects one of the carry propagate signal P0 and a value '1', depending on the values of the carry propagate signal P0 and inverted carry propagate signal $\overline{P0}$. The selected signal is supplied, as the carry signal C0,1, to the transfer gate TG22 and the inverter INV41. The transfer gate TG22 selects one of the carry signal C0,1 and the carry generate signal G1, depending on the values of the carry propagate signal P1 and inverted carry propagate signal $\overline{P1}$. The selected signal is the carry signal C1,1, which is supplied to the transfer gate TG23, the inverter INV43 and the exclusive-OR gate XOR2. The carry generate signal G2 is supplied to the inverter INV48. The output signal of the transfer gate TG23 is the inverted carry signal $\overline{C2,1}$, which is supplied to the transfer gate TG24, the inverter 44 and the exclusive-OR gate XOR3. The carry generate signal G3 is supplied to the transfer gate TG24 through the inverter INV50. The output signal of the transfer gate TG24 is the inverted carry signal $\overline{C3,1}$, which is supplied to the inverter INV52. The output of the inverter INV52 is the provisional carry signal C3(1), which is one candidate to be propagated to the multiplexer 42 (FIG.11).

Referring to FIG.12C, the provisional sum signal F0(0) is the carry propagate signal P0. The provisional sum signals F1(0) through F3(0) are output from the exclusive-OR gates XOR4 through XOR6, respectively. The provisional carry signal C3(0) is generated by a circuit portion, which is made up of the transfer gates TG25 through TG27, and associated inverters INV56 through INV58. The transfer gate TG25 is supplied with the carry generate signal G0 through the inverter INV56, and the carry generate signal G1 through the inverter 57, and selects one of the two input signals, depending on the values of the carry propagate signal P1 and inverted carry propagate signal $\overline{P1}$. The selected signal, i.e., the inverted carry signal $\overline{C1,0}$ is supplied to the transfer gate TG26, the inverter INV54 and the exclusive-OR gate XOR5. The transfer gate TG26 is also supplied with the inverted carry generate signal $\overline{G2}$, and selects one of the two input signals. The selected signal is the inverted carry signal $\overline{C2,0}$, which is then supplied to the transfer gate TG27, the inverter 55 and the exclusive-OR gate XOR6. The inverted carry generate signal $\overline{G3}$ is supplied to the transfer gate TG27, which selects one of the two input signals, depending on the values of the carry propagate signal P3 and inverted carry propagate signal $\overline{P3}$. The selected signal, i.e., the inverted carry signal $\overline{C3,0}$ is supplied to the inverter INV58, which outputs the provisional carry signal C3(0).

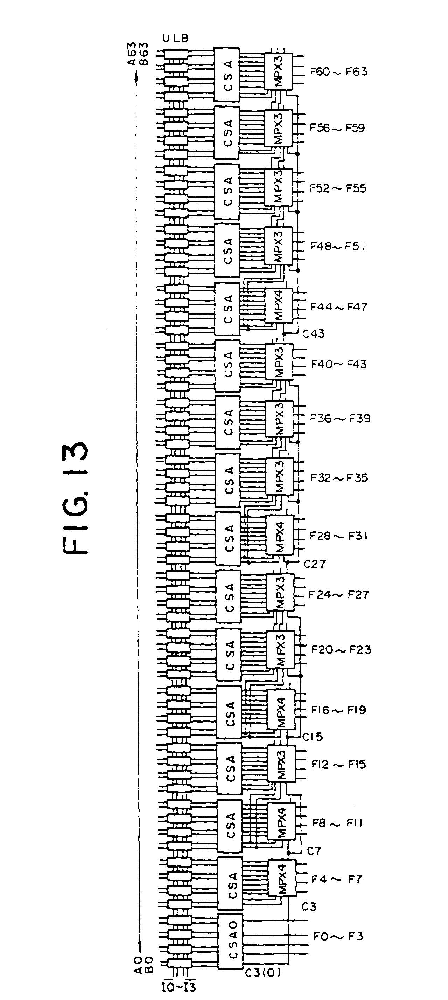

FIG.13 is a block diagram of a 64-bit-length arithmetic and logic unit based on the aforementioned second embodiment. In this figure, it is assumed that the partitioned adder relating to the lowest-order digit always outputs the provisional carry signal C3(0). As shown in FIG.13, some multiplexers (MPX3, MPX4) and partitioned adders are added to the structure of FIG.11 in order to process 64 bits. Further, carry propagate/generate units ULB are illustrated in FIG.13. Each of the carry propagate/generate units ULB has functions of generating a bit Ai (i = 0, 1, 2, ..., 63; A0 - A63) of the i-th digit of 64-bit binary digit A, a bit Bi (B0 - B63) of the i-th digit of 64-bit binary digit B, function selecting signals $\overline{I0}$ through $\overline{I3}$, carry propagate signals P0 through P63, and carry generate signals G0 through G63. A suitable known circuit may be used for forming the carry propagate/generate units ULB.

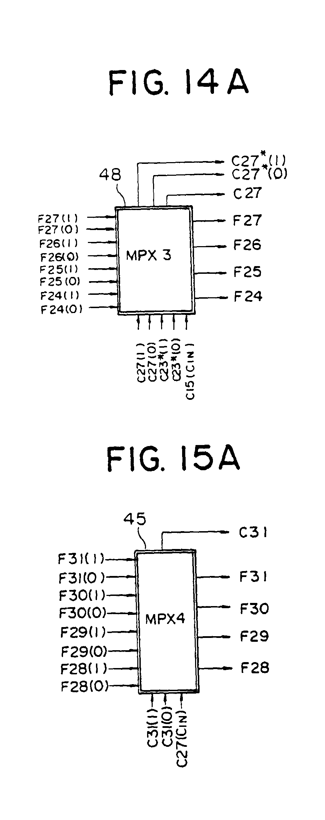

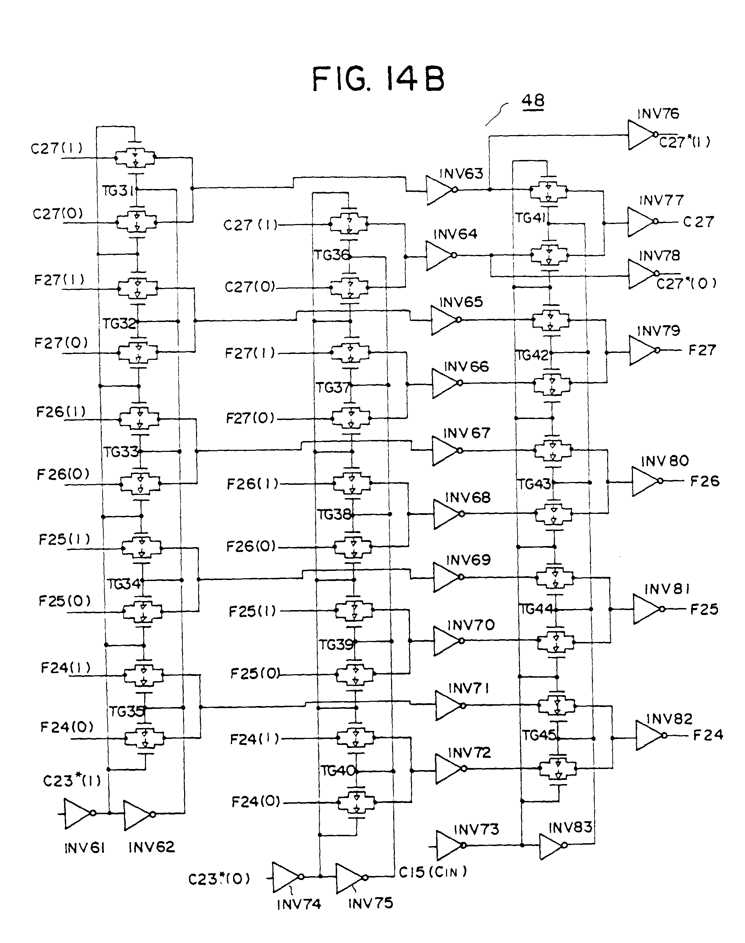

FIGS.14A and 14B illustrate an example of the structure for the multiplexer (MPX3) 48 shown in FIG.11. The illustrated structure is applied to each of the other multiplexers of the same type 46, 47, 49, 50 and 51. The multiplexer 48 may be constructed by adding a function of selecting one of two sets of provisional sum signals F24(1) - F27(1) and F24(0) - F27(0), in addition to the functions of the multiplexer 28 shown in FIGS.10A and 10B.

The multiplexer 48 has a first circuit portion, which is provided with respect to each of the provisional carry signals C23*(1) and C23*(0) and functions to select one of the provisional carry signals C27(0) and C27(1) beforehand by referring to values of '1' and '0' of the provisional carry signals C23*(1) and C23*(0). The selected carry signals with respect to the provisional carry signals C23*(1) and C23*(0) are output as the provisional carry signals C27*(1) and C27*(0), respectively. Further, the multiplexer 48 has a second circuit portion, which functions to determine the real carry signal C27 by selecting one of the carry signals obtained with respect to the provisional carry signals C23*(1) and C23*(0) on the basis of a value '1' or '0' of the real carry signal C15 propagated from the multiplexer 46 (FIG.11) when the real carry signal C15 is determined. The real carry signal C15 is a signal which is sifted from a partitioned adder (partitioned adder 34 in this case) which is spaced towards lower-order digits from the partitioned adder of concern (partitioned adder 37) by an amount corresponding to two or more partitioned adders. In this manner, the first and second circuit portions form a two-stage circuit in view of operation.

Referring to FIG.14B, the above-mentioned first circuit includes the transfer gates TG31 through TG40, and inverters INV61 through INV76 and INV78. The transfer gates TG31 through TG35 are controlled by output signals of inverters INV61 and INV62. The transfer gates TG36 through TG40 are controlled by output signals of inverters INV74 and INV75. The transfer gates TG41 through TG45 are controlled by inverters INV73 and INV83. The inverters INV61, INV74 and INV73 are supplied with the provisional carry signals C23*(1), C23*(0) and the real carry signal C15, respectively.

The transfer gates TG31 and TG41 select either the provisional carry signals C27(1) or C27(0), and correspond to the transfer gates TG15 and TG16 shown in FIG.10B. The inverters INV63 and INV64 correspond to the inverters INV29 and INV32 shown in FIG.10B. A circuit portion, which is made up of the transfer gates TG32 and TG37 and inverters INV65 and INV66, is provided with respect to each of the provisional carry signals C23*(1) and C23*(0) in order to select one of the provisional sum signals F27(1) and F27(0). In the same way, the transfer gates TG33 and TG38, and the inverters INV67 and INV68 are provided with respect to the provisional sum signals F26(1) and F26(0). The transfer gates TG34 and TG39, and the inverters INV69 and INV70 are provided with respect to the provisional sum signals F25(1) and F25(0). The transfer gates TG35 and TG40, and the inverters INV71 and INV72 are provided with respect to the provisional sum signals F24(1) and F24(0).

The multiplexer 48 also includes a second circuit portion, which includes the transfer gates TG41 through TG45, and inverters INV77, INV79, INV80, INV81 and INV82. The transfer gate T42 selects one of the provisional sum signals supplied from the inverters INV65 and INV66. The selected signal passes through the inverter 79, which outputs the real sum signal F27. The transfer gate T43 selects one of the provisional sum signals supplied from the inverters INV67 and INV68. The selected signal passes through the inverter 80, which outputs the real sum signal F26. The transfer gate T44 selects one of the provisional sum signals supplied from the inverters INV69 and INV70. The selected signal passes through the inverter 81, which outputs the real sum signal F25. The transfer gate T45 selects one of the provisional sum signals supplied from the inverters INV71 and INV72. The selected signal passes through the inverter 82, which outputs the real sum signal F24.

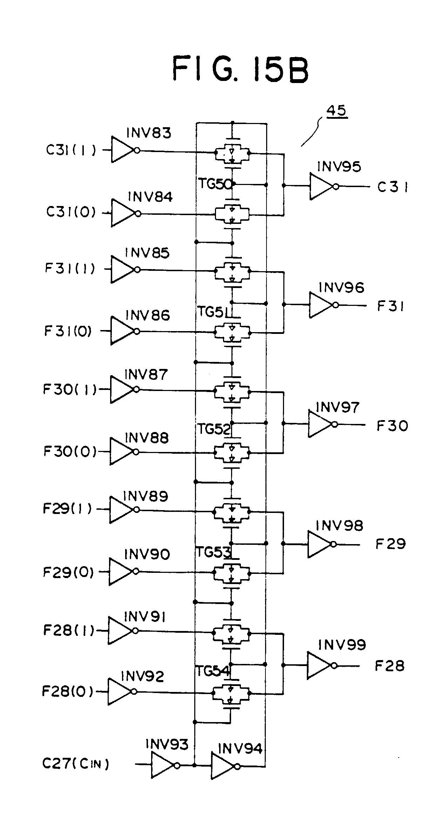

FIGS.15A and 15B illustrate an example of the structure for the multiplexer (MPX4) 45. The illustrated structure is applied to each of the other multiplexers of the same type 42 through 44. The multiplexer 45 has functions of selecting one of the provisional carry signals C31(1) and C31(0) and selecting one of two sets of provisional sum signals F28(1) through F31(1) and F28(0) through F31(0), on the basis of a value '1' or '0' of the real carry signal C27.

Referring to FIG.15B, the multiplexer 45 includes the transfer gates TG50 through TG54, and inverters INV83 through INV99. The transfer gate TG50 corresponds to the transfer gate TG14 shown in FIG.9B. The inverters INV83, INV84 and INV95 correspond to the inverters INV22, INV23 and INV26 shown in FIG.9B, respectively. The inverters INV93 and INV94 correspond to the inverters INV24 and INV25 shown in FIG.9B, respectively. The output signals of the inverters INV93 and INV94 are supplied to the transfer gates TG50 through TG54. A circuit portion identical to the circuit portion, which consists of the transfer gate TG50 and inverters INV83, INV84 and INV95, is provided for each of pairs of provisional sum signals F31(1), F31(0); F30(1), F30(0); F29(1), F29(0); and F28(1), F28(0). That is, the transfer gate TG51 and the inverters INV85, INV86 and INV96 are provided with respect to the provisional sum signals F31(1) and F31(0). The transfer gate TG52 and the inverters INV87, INV88 and INV97 are provided with respect to the provisional signals F30(1) and F30(0). The transfer gate TG53 and the inverters INV89, INV90 and INV98 are provided with respect to the provisional signals F29(1) and F29(0). The transfer gate TG54 and the inverters INV91, INV92 and INV99 are provided with respect to the provisional sum signals F29(1) and F29(0).

In operation of the second embodiment, the multiplexer 42 relating to the fourth to seventh digits outputs the real sum signals F4 through F7 and the real carry signals C7 at the same time. The real carry signal C7 is supplied to the multiplexer 43 which determines the real sum signals F8 through F11, and also the multiplexer 46 which determines the real sum signals F12 through F15. Before the supply of the real carry signal C7, the multiplexer 46 already generates the provisional carry signals C15*(1) and C15*(0) by using the provisional carry signals C11(1) and C11(0) propagated from the partitioned adder 33, and the provisional carry signals C15(1) and C15(0) supplied from the partitioned adder 34. Then, when the real carry signal C7 is supplied to the multiplexers 43 and 46, the real carry signals C11 and C15 are simultaneously determined, and the real sum signals F8 through F11 and F12 through F15 are also determined at the same time.

## Claims

1. An operation circuit for M-bit parallel full addition, comprising N partitioned adders (11 - 21) provided for every n bits, $n < M$; $N \geq M/n$, and means (22 - 31) for generating real carry signals Ck and $C_{ns-1}$ relating to said partitioned adders,

   wherein each of said partitioned adders generates a pair of provisional carry signals $C_{ns-1}(1)$ and $C_{ns-1}(0)$ relating to the s-th, partitioned adder from the partitioned adder relating to the lowest-order digit, s = 1 to N, and generates real sum signals Fj amounting to n bits, said paired provisional carry signals being calculated supposing a first case where the carry of a lower-order digit is '1' and a second case where the carry of said digit is '0', and

   said means comprises first means (22 - 25) for selecting one of paired provisional carry signals $C_{ns-1}(1)$ and $C_{ns-1}(0)$ supplied from the s-th partitioned adder, depending on the value of the real carry signal $C_{(s-1)n-1}$ supplied from the (s-1)th partitioned adder, said selected one of said provisional carry signals being the real

carry signal $C_{ns-1}$ to be propagated from the s-th partitioned adder, and

second means (26 - 31) for generating a pair of provisional carry signals Ck*(1) and Ck*(0), k = n(s + 1) - 1, n(s + 2) -1, ..., n(s + $\ell$) - 1, by referring to paired provisional carry signals Cr(1) or Cr*(1); r = k - n = ns - 1, and Cr(0) or Cr*(0); r = k - n = ns - 1, which are lower by n digits than the ones to be generated, and for generating $\ell$ real carry signals Ck at the same time by selecting either said provisional carry signal Ck*(1) or Ck*(0), depending on the real carry signal $C_{(s-1)n-1}$ relating to a digit which is one digit lower than the lowest-order digit of the s-th partitioned adder.

2. An operation circuit as claimed in claim 1, characterized in that each of said partitioned adders is a 4-bit partitioned adder, n = 4, and said first means comprises first and second multiplexers (22, 23) associated with the second and third partitioned adders (12, 13), respectively, said second means comprising a first multiplexer (26) associated with the fourth partitioned adder (14),

that said first multiplexer (22) selects one of a pair of provisional carry signals C7(1) and C7(0) relating to the seventh digit, depending on the value of the real carry signal C3 propagated from the first partitioned adder (11), thereby generating a real carry signal C7 relating to the seventh digit, which is supplied to said second multiplexer (23) of said first means and said first multiplexer (26) of said second means,
that said first multiplexer (23) selects one of a pair of provisional carry signals C11(1) and C11(0) relating to the eleventh digit, depending on the value of the real carry signal propagated from the real carry signal C7 relating to the seventh digit, and
that said first multiplexer (26) of said second means generates a pair of provisional carry signals C15*(1) and C15*(0) by using a pair of provisional carry signals C11(1) and C11(0) propagated from the third partitioned adder (13) and a pair of provisional carry signal C15(1) and C15(0) propagated from the fourth partitioned adder (14), and generates a real carry signal C15 when the real carry signal C7 of the second partitioned adder (12) is generated.

3. An operation circuit as claimed in claim 2, characterized in that said first means comprises a third multiplexer (24) and said second means comprises second and third multiplexers (27, 28), and a pair of provisional carry signals C19(1) and C19(0) supplied from the fifth partitioned adder (15) is supplied to said third multiplexer (24) of said first means and said second multiplexer (27) of said means,

that said second multiplexer (27) of said second means generates a pair of provisional carry signals C23*(1) and C23*(0) from said paired provisional carry signals C19(1) and C19(0) and a pair of provisional carry signals C23(1) and C23(0) supplied from the sixth partitioned adder (16), said paired provisional carry signals C23*(1) and C23*(0) being supplied to the third multiplexer (28) of said second means, which generates a pair of provisional carry signals C27*(1) and C27*(0), and
that when said real carry signal C15 is generated, said third multiplexer (24) of said first means generates a real carry signal C19 relating to the fifth partitioned adder, said second and third multiplexers (27, 28) of said second means generate real carry signals C23 and C27 relating to the sixth and seventh partitioned adders (16, 17), respectively.

4. An operation circuit as claimed in claim 1, characterized in that said first means comprises a selector (TG14) which selects either said provisional carry signal $C_{ns-1}(1)$ or $C_{ns-1}(0)$, and an inverter (INV26) through which the selected provisional carry signal passes, and characterized in that said inverter outputs said real carry signal $C_{ns-1}$.

5. An operation circuit as claimed in claim 4, characterized in that said selector comprises a transfer gate.

6. An operation circuit as claimed in claimed 1, characterized in that said second means comprises a first selector (TG15) which selects either said provisional carry signal Ck(1) or Ck(0), depending on the value of said provisional carry signal Cr(1) or Cr*(1); r = k - n = ns - 1;

a second selector (TG16) which selects either said provisional carry signal Ck(1) or Ck(0), depending on the value of said provisional carry signal $C_{ns-1}(0)$ or Ck*(0); k = ns - 1;
first and second inverters (INV29, INV32) through which selected provisional carry signals supplied from said first and second selectors pass, respectively;
a third selector (TG17) which selects one of the signals supplied from said first and second inverters;
and a third inverter (INV36) through which said carry signal supplied from said third selector passes, the output signal of said third selector being the real carry signal Ck.

7. An operation circuit as claimed in claim 6, characterized in that said second means further comprises fourth and fifth inverters (INV35, INV37) connected to said first and second inverters (INV29, INV32), respectively, and output signals of said fourth and fifth inverters are said provisional carry signals $Ck^*(1)$ and $Ck^*(0)$.

8. An operation circuit as claimed in claim 1, characterized in that each of said N partitioned adders (11 - 21) comprises real sum generating means for generating said real sum signals Fj amounting to n bits, said real sum generating means including transfer gates (TG4 -TG10) and inverters (INV8 - INV15, INV20, INV21), and further comprises provisional carry signal generating means for generating said pair of provisional carry signals $C_{ns-1}(1)$ and $C_{ns-1}(0)$, said provisional carry signal generating means including transfer gates (TG1 - TG3, TG11 - TG13) and inverters (INV1 - INV7, INV16 - INV19).

9. An operation circuit as claimed in any of claimed 1 to 8, characterized in that said $\ell$ is set so as to increase toward the highest digit.

10. An operation circuit for M-bit parallel full addition, comprising N partitioned adders (11, 32 - 41) provided for every n bits, n < M; $N \geq M/n$, and means (42 - 51) for generating real carry signals Ck and $C_{ns-1}$, and real sum signals Fj relating to said partitioned adders,

    wherein each of said partitioned adders generates a pair of provisional carry signals $C_{ns-1}(1)$ and $C_{ns-1}(0)$ relating to the s-th partitioned adder from the partitioned adder relating to the lowest-order digit, s = 1 to N, , and generates a pair of provisional sum signals Fj(1) and Fj(0) each amounting to n bits, said paired provisional carry signals and said paired provisional sum signals being calculated supposing a first case where the carry of a lower-order digit is '1' and a second case where the carry of said digit is '0', and
    that said means comprises first means (42 - 45) for selecting one of paired provisional carry signals $C_{ns-1}(1)$ and $C_{ns-1}(0)$ and selecting one of paired provisional sum signals Fj(1) and Fj(0) supplied from the s-th partitioned adder, depending on the value of the real carry signal $C_{(s-1)n-1}$ supplied from the (s-1)th partitioned adder, said selected one of said provisional carry signals being the real carry signal $C_{ns-1}$ to be propagated from the s-th partitioned adder, said selected one of said provisional sum signals being the real sum signals amounting to n bits relating to said s-th partitioned adder, and
    second means (46 - 51) for generating a pair of provisional carry signals $Ck^*(1)$ and $Ck^*(0)$, k = n(s + 1) - 1, n(s + 2) -1, ..., $n(s + \ell)$ - 1, by referring to paired provisional carry signals Cr(1) or $Cr^*(1)$; r = k - n = ns - 1, and Cr(0) or $Cr^*(0)$; r = k - n = ns - 1, which are lower by n digits than the ones to be generated, and for generating $\ell$ real carry signals Ck, and real sum signals Fj amounting to $n\ell$ digits at the same time by selecting either said provisional carry signal $Ck^*(1)$ or $Ck^*(0)$, and by selecting either provisional sum signals Fj(1) of Fj(0), depending on the real carry signal $C_{(s-1)n-1}$ relating to a digit which is one digit lower than the lowest-order digit of the s-th partitioned adder.

11. An operation circuit as claimed in claim 10, characterized in that each of said partitioned adders is a 4-bit partitioned adder, n = 4, and said first means comprises first and second multiplexers (42, 43) associated with the second and third partitioned adders (32, 33), respectively, said second means comprising a first multiplexer (46) associated with the fourth partitioned adder (34),

    that said first multiplexer (42) selects one of a pair of provisional carry signals C7(1) and C7(0) and selects one of a pair of provisional sum signals Fj(1) and Fj(0), j = 4 - 7, relating to the fourth to the seventh digits, depending on the value of the real carry signal C3 propagated from the first partitioned adder (11), thereby generating a real carry signal C7 relating to the seventh digit, which is supplied to said second multiplexer (43) of said first means and said first multiplexer (46) of said second means, and generating the real sum signal Fj, j = 4 - 7,
    that said second multiplexer (43) selects one of a pair of provisional carry signals C11(1) and C11(0) and selects one of a pair of provisional sum signals Fj(1) and Fj(0), j = 8 - 11 relating to the eighth to the eleventh digits, depending on the value of the real carry signal C7 relating to the seventh digit, and
    that said first multiplexer (46) of said second means generates a pair of provisional carry signals $C15^*(1)$ and $C15^*(0)$ by using a pair of provisional carry signals C11(1) and C11(0) propagated from the third partitioned adder (33) and a pair of provisional carry signals (C15(1) and C15(0) propagated from the fourth partitioned adder (34), and generates a real carry signal C15 when the real carry signal C7 of the second partitioned adder (32) is generated, and the real sum signal Fj, j = 12 - 15.

12. An operation circuit as claimed in claim 11, characterized in that said first means comprises a third multiplexer (44) and said second means comprises second and third multiplexers (47, 48), and a pair of provisional carry signals C19(1) and C19(0) supplied from the fifth partitioned adder (35) is supplied to said third multiplexer (44) of said first means and said second multiplexer (47) of said second means,

that said second multiplexer (47) of said second means generates a pair of provisional carry signals C23*(1) and C23*(0) from said paired provisional carry signals C19(1) and C19(0) and a pair of provisional carry signals C23(1) and C23(0) supplied from the sixth partitioned adder (16), said paired provisional carry signals C23* (1) and C23*(0) being supplied to the third multiplexer (48) of said second means, which generates a pair of provisional carry signals C27*(1) and C27*(0), and

that when said real carry signal C15 is generated, said third multiplexer (44) of said first means generates a real carry signal C19 and real sum signal Fj, j = 16 - 19, relating to the fifth partitioned adder, said second multiplexer (47) of said second means generates real carry signals C23 and real sum signal Fj, j = 20 - 23, relating to the sixth partitioned adder (36), and said third multiplexer (48) of said second means generates a real carry signal C27 and real sum signal Fj, j = 24 - 27, relating to the seventh partitioned adder (37), respectively.

13. An operation circuit as claimed in claim 10, characterized in that said second means comprises first selector means (TG31, INV63, INV76) for selecting either said provisional carry signal Ck(1) or Ck(0), depending on the value of said provisional carry signal Cr(1), or Cr*(1), r = k- n = ns - 1, the selected provisional signal being said provisional carry signal Ck*(1);

second selector means (TG36, INV64, INV78) for selecting either said provisional carry signal Ck(1) or Ck(0), depending on the value of said provisional carry signal Cr(0) or Cr*(0); r = k - n = ns - 1, the selected provisional signal being said provisional carry signal Ck*(0);
third selector means (TG32 - TG35, INV65, INV67, INV69, INV71) for selecting either said provisional sum signal Fj(1) or Fj(0), depending on the value of said provisional carry signal Cr(1) or Cr*(1); r = k - n = ns - 1;
fourth selector means (TG37 - TG40, INV66, INV68, INV70, INV72) for selecting either said provisional sum signal Fj(1) or Fj(0), depending on the value of said provisional carry signal Cr(0) or Cr*(0); r = k - n = ns - 1;
fifth selector means (TG41, INV77) for selecting one of signals supplied from said first and second selector means, depending on said real carry signal $C_{(s-1)n-1}$, thereby generating said real carry signal Ck, and
sixth selector means (TG42 - TG45, INV79 - INV82) for selecting one of signals supplied from said third and fourth selector means, depending on said real carry signal $C_{(s-1)n-1}$, thereby generating said real sum signal Fj.

14. An operation circuit as claimed in claim 10, characterized in that said first means comprises first selector means (TG50, INV83, INV84, INV95) for selecting either said provisional carry signal $C_{ns}$ (1) or $C_{ns-1}$(0), depending on the value real carry signal $C_{(s-1)n-1}$, thereby producing said real carry signal $C_{ns-1}$; and
second selector means (TG51 - TG54, INV85 - INV92, INV96 - INV99) for selecting either said provisional sum signal Fj(1) or Fj(0), depending on the value of said real carry signal $C_{(s-1)n-1}$, thereby producing said real sum signal Fj.

15. An operation circuit as claimed in any of claims 10 to 14, characterized in that each of said first through sixth selector means comprises transfer gates and inverters.

16. An operation circuit as claimed in claim 14, characterized in that each of said first and second selector means comprises transfer gates and inverters.

17. An operation circuit as claimed in any of claims 10 to 16, characterized in that said $\ell$ is set so as to increase toward the highest digit.

**Patentansprüche**

1. Operationsschaltung zur M-Bit-Parallelvolladdition, mit N Teiladdierern (11 - 21), die für immer n Bits, j n < M; N ≥ M/n, vorgesehen sind, und einem Mittel (22 - 31) zum Erzeugen von echten Übertragssignalen Ck und $c_{ns-1}$ bezüglich der Teiladdierer,

bei der jeder der Teiladdierer ein Paar von provisorischen Übertragssignalen $C_{ns-1}$(1) und $C_{ns-1}$(0) bezüglich des s-ten Teiladdierers ab dem Teiladdierer bezüglich der Stelle niedrigster Ordnung erzeugt, wobei s = 1 bis N ist, und echte Summensignale Fj erzeugt, die sich auf n Bits belaufen, wobei die gepaarten provisorischen Übertragssignale unter der Annahme eines ersten Falles berechnet werden, bei dem der Übertrag einer Stelle niedrigerer Ordnung '1' ist, und eines zweiten Falles, bei dem der Übertrag der Stelle '0' ist, und

das Mittel ein erstes Mittel (22 - 25) umfaßt, zum Selektieren eines von gepaarten provisorischen Übertragssignalen $C_{ns-1}(1)$ ) und $C_{ns-1}(0)$ die von dem s-ten Teiladdierer zugeführt werden, in Abhängigkeit von dem Wert des echten Übertragssignals $C_{(s-1)n-1}$, das von dem (s-1)-ten Teiladdierer zugeführt wird, welches selektierte der provisorischen Übertragssignale das echte Übertragssignal $C_{ns-1}$ ist, das von dem s-ten Teiladdierer auszubreiten ist, und

ein zweites Mittel (26 - 31) zum Erzeugen eines Paares von provisorischen Übertragssignalen Ck*(1) und Ck*(0), $k = n(s + 1) - 1, n(s + 2) - 1, ..., n(s + \ell) - 1$, unter Bezugnahme auf gepaarte provisorische Übertragssignale Cr(1) oder Cr*(1); $r = k - n = ns - 1$, und Cr(0) oder Cr*(0); $r = k - n = ns - 1$, die um n Stellen niedriger als die zu erzeugenden sind, und zum Erzeugen von $\ell$ echten Übertragssignalen Ck zu derselben Zeit, indem entweder das provisorische Übertragssignal Ck*(1) oder Ck*(0) selektiert wird, in Abhängigkeit von dem echten Übertragssignal $C_{(s-1)n-1}$ bezüglich einer Stelle, die eine Stelle niedriger als die Stelle niedrigster Ordnung des s-ten Teiladdierers ist.

2. Operationsschaltung nach Anspruch 1, dadurch gekennzeichnet, daß jeder der Teiladdierer ein 4-Bit-Teiladdierer ist, n = 4 ist, und das erste Mittel erste und zweite Multiplexer (22, 23) umfaßt, die den zweiten bzw. dritten Teiladdierern (12, 13) zugeordnet sind, welches zweite Mittel einen ersten Multiplexer (26) umfaßt, der dem vierten Teiladdierer (14) zugeordnet ist,

daß der erste Multiplexer (22) eines von einem Paar von provisorischen Übertragssignalen C7(1) und C7(0) bezüglich der siebten Stelle selektiert, in Abhängigkeit von dem Wert des echten Übertragssignals C3, das von dem ersten Teiladdierer (11) ausgebreitet wird, wodurch ein echtes Übertragssignal C7 bezüglich der siebten Stelle erzeugt wird, welches dem zweiten Multiplexer (23) des ersten Mittels und dem ersten Multiplexer (26) des zweiten Mittels zugeführt wird,
daß der erste Multiplexer (23) eines von einem Paar von provisorischen Übertragssignalen C11(1) und C11(0) bezüglich der elften Stelle selektiert, in Abhängigkeit von dem Wert des echten Übertragssignals, der von dem echten Übertragssignal C7 bezüglich der siebten Stelle ausgebreitet wird, und
daß der erste Multiplexer (26) des zweiten Mittels ein Paar von provisorischen Übertragssignalen C15*(1) und C15*(0) unter Verwendung eines Paares von provisorischen Übertragssignalen C11(1) und C11(0) erzeugt, die von dem dritten Teiladdierer (13) ausgebreitet werden, und eines Paares von provisorischen Übertragssignalen C15(1) und C15(0), die von dem vierten Teiladdierer (14) ausgebreitet werden, und ein echtes Übertragssignal C15 erzeugt, wenn das echte Übertragssignal C7 des zweiten Teiladdierers (12) erzeugt ist.

3. Operationsschaltung nach Anspruch 2, dadurch gekennzeichnet, daß das erste Mittel einen dritten Multiplexer (24) umfaßt und das zweite Mittel zweite und dritte Multiplexer (27, 28) umfaßt und ein Paar von provisorischen Übertragssignalen C19(1) und C19(0), die von dem fünften Teiladdierer (15) zugeführt werden, dem dritten Multiplexer (24) des ersten Mittels und dem zweiten Multiplexer (27) des zweiten Mittels zugeführt wird,

daß der zweite Multiplexer (27) des zweiten Mittels ein Paar von provisorischen Übertragssignalen C23*(1) und C23*(0) aus den gepaarten provisorischen Übertragssignalen C19(1) und C19(0) und einem Paar von provisorischen Übertragssignalen C23(1) und C23(0), die von dem sechsten Teiladdierer (16) zugeführt werden, erzeugt, welche gepaarten provisorischen Übertragssignale C23*(1) und C23*(0) dem dritten Multiplexer (28) des zweiten Mittels zugeführt werden, der ein Paar von provisorischen Übertragssignalen C27*(1) und C27*(0) erzeugt, und
daß dann, wenn das echte Übertragssignal C15 erzeugt ist, der dritte Multiplexer (24) des ersten Mittels ein echtes Übertragssignal C19 bezüglich des fünften Teiladdierers erzeugt, die zweiten und dritten Multiplexer (27, 28) des zweiten Mittels echte Übertragssignale C23 und C27 bezüglich der sechsten bzw. siebten Teiladdierer (16, 17) erzeugen.

4. Operationsschaltung nach Anspruch 1, dadurch gekennzeichnet, daß das erste Mittel einen Selektor (TG14) umfaßt, der entweder das provisorische Übertragssignal $C_{ns-1}(1)$ oder $C_{ns-1}(0)$ selektiert, und einen Inverter (INV26), durch den das selektierte provisorische Übertragssignal hindurchtritt, und dadurch gekennzeichnet, daß der Inverter das echte Übertragssignal $C_{ns-1}$ ausgibt.

5. Operationsschaltung nach Anspruch 4, dadurch gekennzeichnet, daß der Selektor ein Transfergate umfaßt.

**6.** Operationsschaltung nach Anspruch 1, dadurch gekennzeichnet, daß das zweite Mittel einen ersten Selektor (TG15) umfaßt, der entweder das provisorische Übertragssignal Ck(1) oder Ck(0) selektiert, in Abhängigkeit von dem Wert des provisorischen Übertragssignals Cr(1) oder Cr*(1); wobei r = k - n = ns - 1 ist;

einen zweiten Selektor (TG16) der entweder das provisorische Übertragssignal Ck(1) oder Ck(0) selektiert, in Abhängigkeit von dem Wert des provisorischen Übertragssignals $C_{ns-1}(0)$ oder Ck*(0); wobei k = ns - 1 ist; erste und zweite Inverter (INV29, INV32), durch die selektierte provisorische Übertragssignale hindurchtreten, die von den ersten bzw. zweiten Selektoren zugeführt werden; einen dritten Selektor (TG17), der eines der Signale selektiert, die von den ersten und zweiten Invertern zugeführt werden; und einen dritten Inverter (INV36), durch den das Übertragssignal hindurchtritt, das von dem dritten Selektor zugeführt wird, wobei das Ausgangssignal des dritten Selektors das echte Übertragssignal Ck ist.

**7.** Operationsschaltung nach Anspruch 6, dadurch gekennzeichnet, daß das zweite Mittel ferner vierte und fünfte Inverter (INV35, INV37) umfaßt, die mit den ersten bzw. zweiten Invertern (INV29, INV32) verbunden sind, und Ausgangssignale der vierten und fünften Inverter die provisorischen Übertragssignale Ck*(1) und Ck*(0) sind.

**8.** Operationsschaltung nach Anspruch 1, dadurch gekennzeichnet, daß jeder der N Teiladdierer (11 - 21) ein Echtsummenerzeugungsmittel umfaßt, zum Erzeugen der echten Summensignale Fj, die sich auf n Bits belaufen, welches Echtsummenerzeugungsmittel Transfergates (TG4 - TG10) und Inverter (INV8 - INV15, INV20, INV21) enthält, und ferner ein Erzeugungsmittel von provisorischen Übertragssignalen umfaßt, zum Erzeugen des Paares von provisorischen Übertragssignalen $C_{ns-1}(1)$ und $C_{ns-1}(0)$, welches Erzeugungsmittel von provisorischen Übertragssignalen Transfergates (TG1 - TG3, TG11 - TG13) und Inverter (INV1 - INV7, INV16 - INV19) enthält.

**9.** Operationsschaltung nach irgendeinem der Ansprüche 1 bis 8, dadurch gekennzeichnet, daß ℓ so festgelegt ist, um hin zu der höchsten Stelle zuzunehmen.

**10.** Operationsschaltung zur M-Bit-Parallelvolladdition, mit N Teiladdierern (11, 32 - 41), die für immer n Bits, n < M; N ≥ M/n, vorgesehen sind, und einem Mittel (42 - 51) zum Erzeugen von echten Übertragssignalen Ck und $C_{ns-1}$ und von echten Summensignalen Fj bezüglich der Teiladdierer,

bei der jeder der Teiladdierer ein Paar von provisorischen Übertragssignalen $C_{ns-1}(1)$ und $C_{ns-1}(0)$ bezüglich des s-ten Teiladdierers ab dem Teiladdierer bezüglich der Stelle niedrigster Ordnung erzeugt, wobei s = 1 bis N ist, und ein Paar von provisorischen Summensignalen Fj(1) und Fj(0) erzeugt, die sich jeweils auf n Bits belaufen, wobei die gepaarten provisorischen Übertragssignale und die gepaarten provisorischen Summensignale unter der Annahme eines ersten Falles berechnet werden, bei dem der Übertrag einer Stelle niedrigerer Ordnung '1' ist, und eines zweiten Falles, bei dem der Übertrag der Stelle '0' ist, und das Mittel ein erstes Mittel (42 - 45) umfaßt, zum Selektieren eines von gepaarten provisorischen Übertragssignalen $C_{ns-1}(1)$ und $C_{ns-1}(0)$ und zum Selektieren eines von gepaarten provisorischen Summensignalen Fj (1) und Fj(0), die von dem s-ten Teiladdierer zugeführt werden, in Abhängigkeit von dem Wert des echten Übertragssignals $C_{(s-1)n-1}$, das von dem (s-1)-ten Teiladdierer zugeführt wird, welches selektierte der provisorischen Übertragssignale das echte Übertragssignal $C_{ns-1}$ ist, das von dem s-ten Teiladdierer auszubreiten ist, welches selektierte der provisorischen Summensignale das echte Summensignal, das sich auf n Bits beläuft, bezüglich des s-ten Teiladdierers ist, und ein zweites Mittel (46 - 51) zum Erzeugen eines Paares von provisorischen Übertragssignalen Ck*(1) und Ck* (0), k = n(s + 1) - 1, n(s + 2) - 1, ..., n(s +ℓ) - 1, unter Bezugnahme auf gepaarte provisorische Übertragssignale Cr(1) oder Cr*(1); r = k - n = ns - 1, und Cr(0) oder Cr*(0); r = k - n = ns - 1, die um n Stellen niedriger als die zu erzeugenden sind, und zum gleichzeitigen Erzeugen von ℓ echten Übertragssignalen Ck und echten Summensignalen Fj, die sich auf nℓ Stellen belaufen, indem entweder das provisorische Übertragssignal Ck*(1) oder Ck*(0) selektiert wird, und indem entweder das provisorische Summensignal Fj(1) oder Fj(0) selektiert wird, in Abhängigkeit von dem echten Über; tragssignal $C_{(s-1)n-1}$ bezüglich einer Stelle, die eine Stelle niedriger als die Stelle niedrigster Ordnung des s-ten Teiladdierers ist.

**11.** Operationsschaltung nach Anspruch 10, dadurch gekennzeichnet, daß jeder der Teiladdierer ein 4-Bit-Teiladdierer ist, n = 4 ist und das erste Mittel erste und zweite Multiplexer (42, 43) umfaßt, die den zweiten bzw. dritten Teiladdierern (32, 33) zugeordnet sind, welches zweite Mittel einen ersten Multiplexer (46) umfaßt, der dem vierten Teiladdierer (34) zugeordnet ist,

daß der erste Multiplexer (42) eines von einem Paar von provisorischen Übertragssignalen C7(1) und C7(0) selektiert und eines von einem Paar von provisorischen Summensignalen Fj(1) und Fj(0), j = 4 - 7, bezüglich der vierten bis siebten Stellen selektiert, in Abhängigkeit von dem Wert des echten Übertragssignals C3, das von dem ersten Teiladdierer (11) ausgebreitet wird, wodurch ein echtes Übertragssignal C7 bezüglich der siebten Stelle erzeugt wird, das dem zweiten Multiplexer (43) des ersten Mittels und dem ersten Multiplexer (46) des zweiten Mittels zugeführt wird, und das echte Summensignal Fj, j = 4 - 7, erzeugt wird,

daß der zweite Multiplexer (43) eines von einem Paar von provisorischen Übertragssignalen C11(1) und C11(0) selektiert und eines von einem Paar von provisorischen Summensignalen Fj(1) und Fj(0), j = 8 - 11, bezüglich der achten bis elften Stellen selektiert, in Abhängigkeit von dem Wert des echten Übertragssignals C7 bezüglich der siebten Stelle, und

daß der erste Multiplexer (46) des zweiten Mittels ein Paar von provisorischen Übertragssignalen C15*(1) und C15*(0) erzeugt, unter Verwendung eines Paares von provisorischen Übertragssignalen C11(1) und C11(0), die von dem dritten Teiladdierer (33) ausgebreitet werden, und eines Paares von provisorischen Übertragssignalen C15(1) und C15(0), die von dem vierten Teiladdierer (34) ausgebreitet werden, und ein echtes Übertragssignal C15 erzeugt, wenn das echte Übertragssignal C7 des zweiten Teiladdierers (32) erzeugt ist, und das echte Summensignal Fj, wobei j = 12 - 15 ist.

12. Operationsschaltung nach Anspruch 11, dadurch gekennzeichnet, daß das erste Mittel einen dritten Multiplexer (44) umfaßt und das zweite Mittel zweite und dritte Multiplexer (47, 48) umfaßt und ein Paar von provisorischen Übertragssignalen C19(1) und C19(0), das von dem fünften Teiladdierer (35) zugeführt wird, dem dritten Multiplexer (44) des ersten Mittels und dem zweiten Multiplexer (47) des zweiten Mittels zugeführt wird,

daß der zweite Multiplexer (47) des zweiten Mittels ein Paar von provisorischen Übertragssignalen C23*(1) und C23*(0) aus den gepaarten provisorischen Übertragssignalen C19(1) und C19(0) und einem Paar von provisorischen Übertragssignalen C23(1) und C23(0), die von dem sechsten Teiladdierer (16) zugeführt werden, erzeugt, welche gepaarten provisorischen Übertragssignale C23*(1) und C23*(0) dem dritten Multiplexer (48) des zweiten Mittels zugeführt werden, der ein Paar von provisorischen Übertragssignalen C27*(1) und C27*(0) erzeugt, und

daß dann, wenn das echte Übertragssignal C15 erzeugt ist, der dritte Multiplexer (44) des ersten Mittels ein echtes Übertragssignal C19 und echtes Summensignal Fj, j = 16 - 19, bezüglich des fünften Teiladdierers erzeugt, der zweite Multiplexer (47) des zweiten Mittels echte Übertragssignale C23 und ein echtes Summensignal Fj, j = 20 - 23, bezüglich des sechsten Teiladdierers (36) erzeugt und der dritte Multiplexer (48) des zweiten Mittels ein echtes Übertragssignal C27 und ein echtes Summensignal Fj, j = 24 - 27, bezüglich des siebten Teiladdierers (37) erzeugt.

13. Operationsschaltung nach Anspruch 10, dadurch gekennzeichnet, daß das zweite Mittel ein erstes Selektormittel (TG31, INV63, INV76) umfaßt, zum Selektieren entweder des provisorischen Übertragssignals Ck(1) oder Ck(0), in Abhängigkeit von dem Wert des provisorischen Übertragssignals Cr(1) oder Cr*(1), r = k - n = ns - 1, wobei das selektierte provisorische Signal das provisorische Übertragssignal Ck*(1) ist;

ein zweites Selektormittel (TG36, INV64, INV78) zum Selektieren entweder des provisorischen Übertragssignals Ck(1) oder Ck(0), in Abhängigkeit von dem Wert des provisorischen Übertragssignals Cr(0) oder Cr*(0) ; r = k - n = ns - 1, wobei das selektierte provisorische Signal das provisorische Übertragssignal Ck*(0) ist;

ein drittes Selektormittel (TG32 - TG35, INV65, INV67, INV69, INV71) zum Selektieren entweder des provisorischen Summensignals Fj(1) oder Fj(0), in Abhängigkeit von dem Wert des provisorischen Übertragssignals Cr(1) oder Cr*(1); r = k - n = ns - 1;

ein viertes Selektormittel (TG37 - TG40, INV66, INV68, INV70, INV72) zum Selektieren entweder des provisorischen Summensignals Fj(1) oder Fj(0), in Abhängigkeit von dem Wert des provisorischen Übertragssignals Cr(0) oder Cr*(0); r = k - n = ns - 1;

ein fünftes Selektormittel (TG41, INV77) zum Selektieren eines von Signalen, die von den ersten und zweiten Selektormitteln zugeführt werden, in Abhängigkeit von dem echten Übertragssignal $C_{(s-1)n-1}$, wodurch das echte Übertragssignal Ck erzeugt wird, und

ein sechstes Selektormittel (TG42 - TG45, INV79 - INV82) zum Selektieren eines von Signalen, die von den dritten und vierten Selektormitteln zugeführt werden, in Abhängigkeit von dem echten Übertragssignal $C_{(s-1)n-1}$, wodurch das echte Summensignal Fj erzeugt wird.

14. Operationsschaltung nach Anspruch 10, dadurch gekennzeichnet, daß das erste Mittel ein erstes Selektormittel (TG50, INV83, INV84, INV95) umfaßt, zum Selektieren entweder des provisorischen Übertragssignals $C_{ns-1}(1)$

oder $C_{ns-1}(0)$, in Abhängigkeit von dem Wert des echten Übertragssignals $C_{(s-1)n-1}$, wodurch das echte Übertragssignal $C_{ns-1}$ erzeugt wird; und

ein zweites Selektormittel (TG51 - TG54, INV85 - INV92, INV96 - INV99) zum Selektieren entweder des provisorischen Summensignals Fj(1) oder Fj(O), in Abhängigkeit von dem Wert des echten Übertragssignals $C_{(s-1)n-1}$, wodurch das echte Summensignal Fj erzeugt wird.

**15.** Operationsschaltung nach irgendeinem der Ansprüche 10 bis 14, dadurch gekennzeichnet, daß jedes der ersten bis sechsten Selektormittel Transfergates und Inverter umfaßt.

**16.** Operationsschaltung nach Anspruch 14, dadurch gekennzeichnet, daß jedes der ersten und zweiten Selektormittel Transfergates und Inverter umfaßt.

**17.** Operationsschaltung nach irgendeinem der Ansprüche 10 bis 16, dadurch gekennzeichnet, daß $\ell$ so festgelegt ist, um hin zu der höchsten Stelle zuzunehmen.

## Revendications

**1.** Circuit d'opération pour une addition complète de M bits parallèles, comprenant N additionneurs partitionnés (11 - 21) prévus pour chaque jeu de n bits, n < M ; N ≥ M/n, et un moyen (22 - 31) pour générer des signaux de report réel Ck et $C_{ns-1}$ se rapportant auxdits additionneurs partitionnés,

dans lequel chacun desdits additionneurs partitionnés génère une paire de signaux de report provisoire $C_{ns-1}$(1) et $C_{ns-1}$(0) se rapportant au s-ième additionneur partitionné à partir de l'additionneur partitionné se rapportant à l'élément numérique d'ordre le plus faible, s = 1 à N, et génère des signaux de somme réelle Fj se montant à n bits, lesdits signaux de report provisoire appairés étant calculés en supposant un premier cas selon lequel le report d'un élément numérique d'ordre plus faible vaut "1" et un second cas selon lequel le report dudit élément numérique vaut "0" ; et

ledit moyen comprend un premier moyen (22-25) pour sélectionner l'un des signaux de report provisoire appairés $C_{ns-1}$(1) et $C_{ns-1}$(0) appliqués depuis le s-ième additionneur partitionné, en fonction de la valeur du signal de report réel $C_{(s1)n-1}$ appliqué depuis le (s-1) ième additionneur partitionné, ledit un sélectionné desdits signaux de report provisoire étant le signal de report réel $C_{ns-1}$ destiné à être propagé depuis le s-ième additionneur partitionné ; et

un second moyen (26-31) pour générer une paire de signaux de report provisoire Ck*(1) et Ck*(0), k = n(s + 1) - 1, n(s + 2) -1, ..., n(s +$\ell$) -1, par report à des signaux de report provisoire appairés Cr(1) ou Cr*(1) ; r = k - n = ns - 1, et Cr(0) ou Cr*(0) ; r = k - n = ns -1, qui sont inférieurs de n éléments numériques par rapport à ceux destinés à être générés, et pour générer $\ell$ signaux de report réel Ck en même temps en sélectionnant l'un ou l'autre dit signal de report provisoire Ck*(1) ou Ck*(0), en fonction du signal de report réel $C_{(s-1)n-1}$ se rapportant à un élément numérique qui est d'un élément numérique inférieur à l'élément numérique d'ordre le plus faible du s-ième additionneur partitionné.

**2.** Circuit d'opération selon la revendication 1, caractérisé en ce que chacun desdits additionneurs partitionnés est un additionneur partitionné de 4 bits, n = 4, et ledit premier moyen comprend des premier et second multiplexeurs (22, 23) associés respectivement aux second et troisième additionneurs partitionnés (12, 13), ledit second moyen comprenant un premier multiplexeur (26) associé au quatrième additionneur partitionné (14),

en ce que ledit premier multiplexeur (22) sélectionne l'un d'une paire de signaux de report provisoire C7(1) et C7(0) se rapportant au septième élément numérique, en fonction de la valeur du signal de report réel C3 propagé depuis le premier additionneur partitionné (11) pour ainsi générer un signal de report réel C7 se rapportant au septième élément numérique, qui est appliqué sur ledit second multiplexeur (23) dudit premier moyen et sur ledit premier multiplexeur (26) dudit second moyen ;

ledit premier multiplexeur (23) sélectionne l'un d'une paire de signaux de report provisoire C11(1) et C11(0) se rapportant au onzième élément numérique, en fonction de la valeur du signal de report réel propagé à partir du signal de report réel C7 se rapportant au septième élément numérique ; et

ledit premier multiplexeur (26) dudit second moyen génère une paire de signaux de report provisoire C15*(1) et C15*(0) en utilisant une paire de signaux de report provisoire C11(1) et C11(0) propagés depuis le troisième additionneur partitionné (13) et une paire de signaux de report provisoire C15(1) et C15(0) propagés depuis le quatrième additionneur partitionné (14), et génère un signal de report réel C15 lorsque le signal de report réel C7 du second additionneur partitionné (12) est généré.

3. Circuit d'opération selon la revendication 2, caractérisé en ce que ledit premier moyen comprend un troisième multiplexeur (24) et ledit second moyen comprend des second et troisième multiplexeurs (27, 28), et une paire de signaux de report provisoire C19(1) et C19(0) appliqués depuis le cinquième additionneur partitionné (15) est appliquée sur ledit troisième multiplexeur (24) dudit premier moyen et sur ledit second multiplexeur (27) dudit second moyen ;

ledit second multiplexeur (27) dudit second moyen génère une paire de signaux de report provisoire C23*(1) et C23*(0) à partir desdits signaux de report provisoire appairés C19(1) et C19(0) et une paire de signaux de report provisoire C23(1) et C23(0) appliqués depuis le sixième additionneur partitionné (16), lesdits signaux de report provisoire appairés C23*(1) et C23*(0) étant appliqués sur le troisième multiplexeur (28) dudit second moyen, lequel génère une paire de signaux de report provisoire C27*(1) et C27*(0) ; et en ce que lorsque ledit signal de report réel C15 est généré, ledit troisième multiplexeur (24) dudit premier moyen génère un signal de report réel C19 se rapportant au cinquième additionneur partitionné, lesdits second et troisième multiplexeurs (27, 28) dudit second moyen génèrent des signaux de report réel C23 et C27 se rapportant respectivement aux sixième et septième additionneurs partitionnés (16, 17).

4. Circuit d'opération selon la revendication 1, caractérisé en ce que ledit premier moyen comprend un sélecteur (TG14) qui sélectionne soit ledit signal de report provisoire $C_{ns-1}(1)$, soit ledit signal de report provisoire $C_{ns-1}(0)$, et un inverseur (INV26) par l'intermédiaire duquel le signal de report provisoire sélectionné passe, et caractérisé en ce que ledit inverseur émet en sortie ledit signal de report réel $C_{ns-1}$.

5. Circuit d'opération selon la revendication 4, caractérisé en ce que ledit sélecteur comprend une porte de transfert.

6. Circuit d'opération selon la revendication 1, caractérisé en ce que ledit second moyen comprend un premier sélecteur (TG15) qui sélectionne soit ledit signal de report provisoire Ck(1), soit ledit signal de report provisoire Ck(0), en fonction de la valeur dudit signal de report provisoire Cr(1) ou Cr*(1) ; r = k - n = ns - 1 ;

un second sélecteur (TG16) qui sélectionne soit ledit signal de report provisoire Ck(1), soit ledit signal de report provisoire Ck(0), en fonction de la valeur dudit signal de report provisoire $C_{ns-1}(0)$ ou Ck*(0) ; k = ns - 1 ;
des premier et second inverseurs (INV29, INV32) par l'intermédiaire desquels des signaux de report provisoire sélectionnés appliqués respectivement depuis lesdits premier et second sélecteurs passent ;
un troisième sélecteur (TG17) qui sélectionne l'un des signaux appliqués depuis lesdits premier et second inverseurs ; et
un troisième inverseur (INV36) par l'intermédiaire duquel ledit signal de report appliqué depuis ledit troisième sélecteur passe, le signal de sortie dudit troisième sélecteur étant le signal de report réel Ck.

7. Circuit d'opération selon la revendication 6, caractérisé en ce que ledit second moyen comprend en outre des quatrième et cinquième inverseurs (INV35, INV37) connectés respectivement auxdits premier et second inverseurs (INV29, INV32) et des signaux de sortie desdits quatrième et cinquième inverseurs sont lesdits signaux de report provisoire Ck*(1) et Ck*(0).

8. Circuit d'opération selon la revendication 1, caractérisé en ce que chacun desdits N additionneurs partitionnés (11 - 21) comprend un moyen de génération de somme réelle pour générer lesdits signaux de somme réelle Fj se montant jusqu'à n bits, ledit moyen de génération de somme réelle incluant des portes de transfert (TG4 - TG10) et des inverseurs (INV8 - INV15, INV20, INV21) et comprend en outre un moyen de génération de signal de report provisoire pour générer ladite paire de signaux de report provisoire $C_{ns-1}(1)$ et $C_{ns-1}(0)$, ledit moyen de génération de signal de report provisoire incluant des portes de transfert (TG1 - TG3, TG11 - TG13) et des inverseurs (INV1 - INV7, INV16 - INV19).

9. Circuit d'opération selon l'une quelconque des revendications 1 à 8, caractérisé en ce que ledit $\ell$ est établi de manière à augmenter en direction de l'élément numérique le plus élevé.

10. Circuit d'opération pour une addition complète de M bits parallèles, comprenant N additionneurs partitionnés (11, 32 - 41) prévus pour chaque jeu de n bits, n < M ; N ≥ M/n et un moyen (42 - 51) pour générer des signaux de report réel Ck et $C_{ns-1}$ et des signaux de somme réelle Fj se rapportant auxdits additionneurs partitionnés,

dans lequel chacun desdits additionneurs partitionnés génère une paire de signaux de report provisoire $C_{ns-1}$(1) et $C_{ns-1}$(0) se rapportant au s-ième additionneur partitionné à partir de l'additionneur partitionné se rapportant à l'élément numérique d'ordre le plus faible, s = 1 à N, et génère une paire de signaux de somme provisoire Fj(1) et Fj(0) dont chacun se monte à n bits, lesdits signaux de report provisoire appairés et lesdits signaux de somme provisoire appairés étant calculés en supposant un premier cas selon lequel le report d'un élément numérique d'ordre plus faible vaut "1" et un second cas selon lequel le report dudit élément numérique vaut "0" ; et

ledit moyen comprend un premier moyen (42-45) pour sélectionner l'un des signaux de report provisoire appairés $C_{ns-1}$(1) et $C_{ns-1}$(0) et pour sélectionner l'un des signaux de somme provisoire appairés Fj(1) et Fj(0) appliqués depuis le s-ième additionneur partitionné, en fonction de la valeur du signal de report réel $C_{(s-1)n-1}$ appliqué depuis le (s-1)-ième additionneur partitionné, ledit un sélectionné desdits signaux de report provisoire étant le signal de report réel $C_{ns-1}$ destiné à être propagé depuis le s-ième additionneur partitionné, ledit un sélectionné desdits signaux de somme provisoire étant les signaux de somme réelle se montant jusqu'à n bits se rapportant audit s-ième additionneur partitionné ; et

un second moyen (46-51) pour générer une paire de signaux de report provisoire Ck*(1) et Ck*(0), k = n(s + 1) - 1, n(s + 2) -1, ..., n(s + $\ell$) -1 par report à des signaux de report provisoire appairés Cr(1) ou Cr*(1) ; r = k - n = ns - 1, et Cr(0) ou Cr*(0) ; r = k - n = ns -1, qui sont inférieurs de n éléments numériques par rapport à ceux destinés à être générés, et pour générer $\ell$ signaux de report réel Ck, et des signaux de somme réelle Fj se montant à ne éléments numériques en même temps en sélectionnant l'un ou l'autre dit signal de report provisoire Ck*(1) ou Ck*(0) et en sélectionnant l'un ou l'autre dit signal de somme provisoire Fj(1) ou Fj(0), en fonction du signal de report réel $C_{(s-1)n-1}$ se rapportant à un élément numérique qui est d'un élément numérique inférieur à l'élément numérique d'ordre le plus faible du s-ième additionneur partitionné.

11. Circuit d'opération selon la revendication 10, caractérisé en ce que chacun desdits additionneurs partitionnés est un additionneur partitionné de 4 bits, n = 4, et ledit premier moyen comprend des premier et second multiplexeurs (42, 43) associés respectivement aux second et troisième additionneurs partitionnés (32, 33), ledit second moyen comprenant un premier multiplexeur (46) associé au quatrième additionneur partitionné (34),

en ce que ledit premier multiplexeur (42) sélectionne l'un d'une paire de signaux de report provisoire C7(1) et C7(0) et sélectionne l'un d'une paire de signaux de somme provisoire Fj(1) et Fj(0), j=4-7, se rapportant aux quatrième à septième éléments numériques, en fonction de la valeur du signal de report réel C3 propagé depuis le premier additionneur partitionné (11) pour ainsi générer un signal de report réel C7 se rapportant au septième élément numérique, qui est appliqué sur ledit second multiplexeur (43) dudit premier moyen et sur ledit premier multiplexeur (46) dudit second moyen, et pour générer le signal de somme réelle Fj, j=4-7;

ledit second multiplexeur (43) sélectionne l'un d'une paire de signaux de report provisoire C11(1) et C11(0) et sélectionne l'un d'une paire de signaux de somme provisoire Fj(1) et Fj(0), j=8-11, se rapportant aux huitième à onzième éléments numériques, en fonction de la valeur du signal de report réel C7 se rapportant au septième élément numérique ; et

ledit premier multiplexeur (46) dudit second moyen génère une paire de signaux de report provisoire C15*(1) et C15*(0) en utilisant une paire de signaux de report provisoire C11(1) et C11(0) propagés depuis le troisième additionneur partitionné (33) et une paire de signaux de report provisoire C15(1) et C15(0) propagés depuis le quatrième additionneur partitionné (34) et génère un signal de report réel C15 lorsque le signal de report réel C7 du second additionneur partitionné (32) est généré, et le signal de somme réelle Fj, j=12-15.

12. Circuit d'opération selon la revendication 11, caractérisé en ce que ledit premier moyen comprend un troisième multiplexeur (44) et ledit second moyen comprend des second et troisième multiplexeurs (47, 48), et une paire de signaux de report provisoire C19(1) et C19(0) appliqués depuis le cinquième additionneur partitionné (35) est appliquée sur ledit troisième multiplexeur (44) dudit premier moyen et sur ledit second multiplexeur (47) dudit second moyen ;

ledit second multiplexeur (47) dudit second moyen génère une paire de signaux de report provisoire C23*(1) et C23*(0) à partir desdits signaux de report provisoire appairés C19(1) et C19(0) et une paire de signaux de report provisoire C23(1) et C23(0) appliqués depuis le sixième additionneur partitionné (16), lesdits signaux de report provisoire appairés C23*(1) et C23*(0) étant appliqués sur le troisième multiplexeur (48) dudit second moyen, lequel génère une paire de signaux de report provisoire C27*(1) et C27*(0) ; et en ce que lorsque ledit signal de report réel C15 est généré, ledit troisième multiplexeur (44) dudit premier moyen génère un signal de report réel C19 et le signal de somme réelle Fj, j=16-19 se rapportant au cinquième additionneur partitionné, ledit second multiplexeur (47) dudit second moyen génère des signaux de report réel C23 et un signal de somme réelle Fj, j=20-23 se rapportant au sixième additionneur partitionné (36) et ledit troisième multiplexeur (48) dudit second moyen génère un signal de report réel C27 et un signal de somme réelle Fj, j=24-27, se rapportant au septième additionneur partitionné (37).

**13.** Circuit d'opération selon la revendication 10, caractérisé en ce que ledit second moyen comprend un premier moyen de sélecteur (TG31, INV63, INV76) pour sélectionner soit ledit signal de report provisoire Ck(1), soit ledit signal de report provisoire Ck(0) en fonction de la valeur dudit signal de report provisoire Cr(1) ou Cr*(1), r = k-n = ns-1, le signal provisoire sélectionné étant ledit signal de report provisoire Ck*(1) ;

un second moyen de sélecteur (TG36, INV64, INV78) pour sélectionner soit ledit signal de report provisoire Ck(1), soit ledit signal de report provisoire Ck(0) en fonction de la valeur dudit signal de report provisoire Cr(0) ou Cr*(0), r = k-n = ns-1, le signal provisoire sélectionné étant ledit signal de report provisoire Ck*(0) ;
un troisième moyen de sélecteur (TG32-TG35, INV65, INV67, INV69, INV71) pour sélectionner soit ledit signal de somme provisoire Fj(1), soit ledit signal de somme provisoire Fj(0) en fonction de la valeur dudit signal de report provisoire Cr(1) ou Cr*(1), r = k-n = ns-1 ;
un quatrième moyen de sélecteur (TG37-TG40, INV66, INV68, INV70, INV72) pour sélectionner soit ledit signal de somme provisoire Fj(1), soit ledit signal de somme provisoire Fj(0) en fonction de la valeur dudit signal de report provisoire Cr(0) ou Cr*(0), r = k-n = ns-1 ;
un cinquième moyen de sélecteur (TG41, INV77) pour sélectionner l'un des signaux appliqués depuis lesdits premier et second moyens de sélecteur en fonction dudit signal de report réel $C_{(s-1)n-1}$, pour ainsi générer ledit signal de report réel Ck ; et
un sixième moyen de sélecteur (TG42 - TG45, INV79 - INV82) pour sélectionner l'un des signaux appliqués depuis lesdits troisième et quatrième moyens de sélecteur en fonction dudit signal de report réel $C_{(s-1)n-1}$, pour ainsi générer ledit signal de somme réelle Fj.

**14.** Circuit d'opération selon la revendication 10, caractérisé en ce que ledit premier moyen comprend un premier moyen de sélecteur (TG50, INV83, INV84, INV95) pour sélectionner soit ledit signal de report provisoire $C_{ns-1}(1)$, soit ledit signal de report provisoire $C_{ns-1}(0)$ en fonction de la valeur dudit signal de report réel $C_{(s-1)n-1}$ pour ainsi produire ledit signal de report réel $C_{ns-1}$ ; et
un second moyen de sélecteur (TG51 - TG54, INV85 - INV92, INV96 - INV99) pour sélectionner soit ledit signal de somme provisoire Fj(1), soit ledit signal de somme provisoire Fj(0) en fonction de la valeur dudit signal de report réel $C_{(s-1)n-1}$ pour ainsi produire ledit signal de somme réelle Fj.

**15.** Circuit d'opération selon l'une quelconque des revendications 10 à 14, caractérisé en ce que chacun desdits premier à sixième moyens de sélecteur comprend des portes de transfert et des inverseurs.

**16.** Circuit d'opération selon la revendication 14, caractérisé en ce que chacun desdits premier et second moyens de sélecteur comprend des portes de transfert et des inverseurs.

**17.** Circuit d'opération selon l'une quelconque des revendications 10 à 16, caractérisé en ce que ledit $\ell$ est établi de manière à augmenter en direction de l'élément numérique le plus élevé.

# FIG. 1 PRIOR ART

# FIG.2A PRIOR ART

0~3  4~7  8~11  12~15  16~19  20~23  24~27  28~31

CARRY
OUTPUT

TG

# FIG.2B PRIOR ART

P   P   P   P   TG

CARRY
INPUT

$C_{IN}$

Cj
CARRY OUTPUT

# FIG.2C PRIOR ART

$C_k$   CARRY
OUTPUT

CI

Ai

Bi

Pi

Fi

TG

$C_{I-1}$

CARRY
INPUT

# FIG. 3A
## PRIOR ART

# FIG. 3B
## PRIOR ART

FIG. 3C
PRIOR ART

P7* G7*  P6* G6*  P5* G5*  P4* G4*  P3* G3*  P2* G2*  P1* G1*  P0* G0*

C31 (Cout)  C27  C23  C19  C15  C11  C7  C3

EP 0 334 768 B1

# FIG. 4

# FIG.5

# FIG. 6A

# FIG. 8

$$Fj(1) = Pj \oplus Cj-1, 1$$

# FIG. 7A

# FIG. 7B

FIG.6B

FIG.10B  FIG.10A  FIG.9A  FIG.9B

# FIG. 11

# FIG. 12 A

```
P3 ──▶          ──▶ F3(1)
G3 ──▶          ──▶ F3(0)
                ──▶ F2(1)
P2 ──▶          ──▶ F2(0)
G2 ──▶   C S A  ──▶ F1(1)
                ──▶ F1(0)
P1 ──▶          ──▶ F0(1)
G1 ──▶          ──▶ F0(0)
                ──▶ C3(1)
PO ──▶          ──▶ C3(0)
GO ──▶
```

11

# FIG. 12 D

XOR1 - XOR3

```
Pj ○──      ┌───┐
            │ ⊕ │──▶ Fj(1)
Pj ○──      └───┘
             │  │
          Cj-1,1  $\overline{Cj-1,1}$
```

# FIG. 12B

# FIG. 12C

EP 0 334 768 B1

FIG. 13

# FIG. 14 A

# FIG. 15A

# FIG. 14 B

# FIG. 15B